(19) Europäisches Patentamt
European Patent Office
Office européen des brevets

(11) **EP 3 812 790 A1**

(12) **EUROPEAN PATENT APPLICATION**

(43) Date of publication:
**28.04.2021 Bulletin 2021/17**

(51) Int Cl.:
**G01S 7/03** (2006.01)  **G01S 7/40** (2006.01)
**G01R 27/28** (2006.01)  **G01S 13/931** (2020.01)

(21) Application number: **20203623.2**

(22) Date of filing: **23.10.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.10.2019 EP 19205207**

(71) Applicant: **Perisens GmbH**
**85622 Feldkirchen (DE)**

(72) Inventor: **Pfeiffer, Dr. Florian**
**85551 Kirchheim b. München (DE)**

(74) Representative: **Stellbrink & Partner**
**Patentanwälte mbB**
**Widenmayerstrasse 10**
**80538 München (DE)**

(54) **DEVICE, SYSTEM AND METHOD FOR CALIBRATION OF RADAR TARGET SIMULATORS**

(57)　In a first embodiment, a radar target simulator (10) configured to generate a virtual target for testing a radar under test (90) is disclosed. The radar target simulator comprises a radio frequency part (20) configured to operate with signals at a radio frequency and an intermediate frequency part (40) configured to operate with signals at an intermediate frequency and a target simulator (50) configured to receive a signal, apply at least one intended modification at the signal and output the signal after applying the at least one intended modification. The radar target simulator further comprises an antenna (30) configured to receive a signal radiated by the radar under test and send the signal through a first signal guider to the target simulator and receive from a second signal guider a signal that is output by the target simulator and radiate the signal such that it can be received by the radar under test. The radar target simulator further comprises a calibration port (62) connected at the intermediate frequency part.

Figure 3a

**Description**

**Filed of invention**

Present invention generally relates to the field of radar testing and calibration. More particularly, the present invention relates to radar target simulators and their calibration.

**Introduction**

Radars are detection systems or sensors that use electromagnetic waves to determine distance to target, direction and velocity of a target, and target size. A radar usually consists of a transmitting unit, or antenna, that radiates electromagnetic waves. The frequency of the emitted electromagnetic waves, can be within a wide range of the electromagnetic spectrum, usually within the radio and microwave part of the spectrum and depends on the use scenario of the radar. The lower the operational frequency of the radar the higher the detection range, as the transmitted electromagnetic waves are less attenuated or affected by external factors, e.g. by weather conditions, radar covers, etc. On the other hand, high frequencies offer a better accuracy and resolution of detection due to the smaller wavelength, but at the same time are highly susceptible to attenuation.

An emerging technology is the use of radar systems in automotive industry, particularly for use in driver assistance systems, such as, adaptive cruise control systems, parking aid systems, blind spot detection, collision avoidance, autonomous emergency braking, lane-change assist, etc. Generally, automotive radars operate with high frequency signals, such as, 20 to 130 GHz or 20 to 160GHz. Some available automotive radar bands are the 24 GHz narrow-band (NB) spanning between 24.05 GHz to 24.25 GHz, the 24 GHz ultra-wide band (UWB) spanning between 21.65 to 26.65 GHz, the automotive long-range radar (LRR) band spanning between 76 to 77 GHz and the automotive short-range radar (SRR) band spanning between 77 to 81 GHz. Usually the operative frequency band of radars are defined by standardization organizations, such as, the European Telecommunications Standards Institute (ETSI) and Federal Communications Commission (FCC).

For a better radar measurement accuracy, radars are generally tested and calibrated. During testing and calibration, the radars are set to perform a radar measurement, which may consist of measuring distance, velocity and/or size of a known or reference target. A known or reference target is a target wherein at least one of the target's distance, direction and velocity relative to the radar and size are priori known or measured. The radar measurements are compared with the priori known information and the accuracy of the radar measurement can be checked. This can allow for calibrating the radar or providing calibration parameters such that the error in the future radar measurements can be compensated for. At the same time, the radar testing allows checking or proving if the radar conforms to standards and/or regulations. That is, radar testing can check if the error of the radar measurements is within a predefined range (usually defined by a respective authority or standardization organization).

The use of physical reference targets for testing and calibrating radars, though it may be satisfactory in some regards it has certain drawbacks, such as, it may require a lot of time and effort to create the measurement setup (e.g. providing the reference target to a specific distance or velocity relative to the radar). Further, creating the measurement setup may be prone to errors. For example, there may be an offset between the real and intended distance that the reference target is provided relative to the radar. As a consequence, the testing and calibration of the radar will not only measure errors of the radar but also errors coming from setting up the reference target and the radar. Thus, the radar testing may suffer from inferior results.

To alleviate such problems, radar target simulators (RTS) are developed and generally used for testing radars. The radar target simulators can be configured to generate virtual targets with a specific size or distance from the radar, simulate moving (i.e. dynamic) targets and even multiple targets instantaneously. They can be used to test and calibrate radars without the need of providing or measuring a physical reference target.

Generally, the radar target simulator can be positioned inside an anechoic chamber. The radar to be tested or the radar under test (RUT) is positioned inside the anechoic chamber in front of the radar target simulator. The radar emits a measuring signal which can be received by the radar target simulator. The radar target simulator can comprise an antenna configured to receive the radar measuring signals. The radar target simulator modifies the received radar measuring signal by delaying, attenuating and/or changing its frequency and transmits the modified radar measuring signal back to the radar. The modification to the radar measuring signal can for example simulate a specific distance to a target (by delaying the signal), and/or velocity of the target (by frequency shifting the signal) and/or size of a target (by attenuating the signal). In other words, by modifying the radar measuring signal properties, the radar target simulator can generate virtual target properties, such as, distance, size and velocity. The radar can then receive the modified measuring signal and measure distance, velocity and/or size of the virtual target. By comparing the radar measurements with the simulated or virtual target properties, the error performed by the radar can be estimated. This can allow for radar testing (e.g. conformity to regulations and standards) and calibration.

However, during the transmission of the radar measuring signal from the radar to the RTS and back to the radar other factors can modify the radar measuring signals as well, in addition to the intended modifications realized by the RTS to simulate target properties. Some of such modifications, which can be referred as unintended modifications may comprise modifications to the radar measuring signal caused by the wireless channel between the radar and the RTS antenna (e.g. the measurement chamber or anechoic chamber), modifications caused by the internal components of the RTS, antenna of the RTS, etc.

The unintended modifications can introduce errors during the testing and calibration of a radar with an RTS. For example, the RTS can be configured to purposefully (i.e. for the purpose of simulating a target) attenuate the measuring signal of the radar under test by 20dB before reflecting it back to the radar under test. However, due to non-desired effects (i.e. unintended modifications), the measuring signal when received by the radar under test can be attenuated by 23dB (i.e. 3 dB attenuation is caused by non-desired or unintended effects). As a result, the error of the radar under test can be overestimated (in the provided illustrative example by 3 dB).

To improve the accuracy of radar testing, a calibration of the RTS device may be advantageous. Sensor manufactures typically demand a one-year calibration period of the RTS device. During calibration, the RTS can be checked whether it can accurately simulate target properties and the error performed by the RTS when simulating target properties can be measured (i.e. quantified).

Current conventional calibration techniques generally consist of performing calibrating measurements at the radar frequency (e.g. 24 - 130 GHz or 24-160 GHz for automotive radars). Such measurements can be performed by radio frequency (RF) measurement instruments configured to perform measurements at high frequencies (e.g. 24 - 130 GHz or 24-160 GHz).

For example, for distance measurement typically network analyzers and frequency extenders are required. The network analyzer can perform measurements in the frequency range of the radar (e.g. in radio frequency 24 - 130 GHz or 24-160 GHz). More particularly, the network analyzer can transmit a signal in the radio frequency range (e.g. between 24 - 130 GHz or 24-160 GHz, such as, a signal centered at 24 GHz, or 76 - 77 GHz). The RTS receives the signal, modifies the signal to simulate the target and transmits (or "reflects") the signal back to the network analyzer. The network analyzer measures the power of the signal transmitted back (or reflected) by the RTS. In other words, considering the network analyzer and the RTS as a one-port network (or a two-port network depending on the configuration of the RTS and/or the network analyzer), the network analyzer measures the S11 scattering parameter, i.e. the reflection coefficient. Then the measurements of the network analyzer, generally performed in the frequency domain, can be transformed in the time-domain to get the distance and size information of the targets. This can allow to check if the RTS simulates the target properties properly.

Typically, current calibration measurements of the RTS devices are performed in two ways: connected measurements and over-the-air measurements. For performing connected measurements, the RTS is typically removed from the measurement chamber (which always bares the risk of damaging the device). Then, the antenna is removed from the RTS and the frequency extenders of the network analyzer are connected to the RTS waveguide flange and the target distance and size are measured (as described above). The calibration measurements can be repeated at several frequency steps. The calibration can be performed on-site (wherein the RTS operates) or in a specialized laboratory. This kind of calibration can also be performed after production of an RTS system.

For over-the-air measurements the RTS may not need to be removed from the chamber but the principle remains the same. At the frequency extender of the network analyzer an antenna is connected and placed at the position wherein the radars under test are provided in the measurement chamber. The calibrating measurement is then conducted the same as described above for connected measurements.

Though present RTS calibration techniques may be satisfactory to some extent, they comprise certain drawbacks. In both the above described RTS calibration techniques, the calibration measurement can be challenging to perform as very complex, large and cost-inefficient measurement equipment (e.g. network analyzers with frequency extenders, configured to operate at high radio frequencies) may be needed and the measurement process may require highly trained and skilled staff to be performed. Further, disadvantageous can be the removal of the RTS from the measurement chamber which always bares the risk of damaging the RTS and/or the measurement chamber. Also, performing the calibration measurement outside the measurement chamber may not allow for measuring and calibrating unintended signal modification coming from the measurement chamber.

Furthermore, as current calibration techniques generally require the need of highly specialized people to be performed and/or removing the RTS from the anechoic chamber they may require more time than it may be needed for this task to be performed. This is particularly disadvantageous when the RTS is part of a production line, wherein the production may need to be halted for extended amount of times.

Furthermore, due to changes or amortizations of the measurement environment (i.e. measurement chamber, e.g. anechoic chamber) or of the radar target simulator, it is typically required that the radar target simulator is calibrated periodically. It can typically be required, to calibrate the radar target simulators every one or two years. However, due to the complexity, extended time required and cost of calibrating the RTS with present techniques, operators of the RTS may be discouraged to perform the calibration of the RTS systems regularly as may be suggested. As a result, the testing of the radars can become an erroneous process over time.

Thus, there is a need to simplify the calibration process of radar target simulators.

## Summary

The present invention provides a system and a method to simplify the calibration of a radar target simulator.

In a first embodiment a radar target simulator configured to generate a virtual target for testing a radar is disclosed. The radar that can be tested by the radar target simulator is also referred as a radar under test (RUT).

In some embodiments, the radar under test which can be tested by the radar target simulator, can be an automotive radar that can be configured for use in driver assistance systems, such as, adaptive cruise control systems, parking aid systems, blind spot detection, collision avoidance, autonomous emergency braking, lane-change assist, etc. Generally, automotive radars can operate with high frequency signals, such as, 20 to 130 GHz or 24-160 GHz. More particularly automotive radars can operate at the 24 GHz narrow-band (NB) spanning between 24.05 GHz to 24.25 GHz, the 24 GHz ultra-wide band (UWB) spanning between 21.65 to 26.65 GHz, the automotive long-range radar (LRR) band spanning between 76 to 77 GHz and the automotive short-range radar (SRR) band spanning between 77 to 81 GHz.

The radar target simulator according to the first embodiment consists of a radio frequency part and an intermediate frequency part. The radio frequency part is configured to operate with signals at a radio frequency. That is, any further element or component that can be comprised by the radar target simulator in the radio frequency part can be configured to operate with signals at radio frequency. On the other hand, the intermediate frequency part is configured to operate with signals at an intermediate frequency. That is, any further element or component that can be further comprised by the radar target simulator in the intermediate frequency part can be configured to operate with signals at intermediate frequency.

The radar target simulator further comprises a target simulator. The target simulator is configured to receive a signal. For example, the target simulator can comprise a signal input port wherein a signal can be provided (i.e. input) to the target simulator. The target simulator is further configured to apply at least one intended modification at the signal. That is, the target simulator can be configured to apply at least one intended modification at a signal that the target simulator can receive on its input port or on a signal that traverses through the target simulator. By modifying the signal, the target simulator can generate a virtual target. For example, the target simulator can modify a signal initially generated by a radar under test in a similar manner that the signal initially generated by the radar can be modified if travelling from the radar to a physical target and being reflected by the physical target back to the radar. Further, the target simulator is configured to output the signal after applying the at least one intended modification. For example, the target simulator can comprise a signal output port, wherein the target simulator can output the modified signal at a further device (e.g. a signal guider).

The radar target simulator further comprises an antenna. The antenna is configured to receive a signal radiated by the radar under test. That is, the antenna can be configured to operate at the same or at least similar frequencies as the radar under test. Further, the antenna is configured to send the signal through a first signal guider to the target simulator. In other words, the first signal guider can be configured to guide a signal from the antenna to the target simulator. The antenna can provide a received signal by the radar under test to the first signal guider which can guide the received signal to the target simulator.

The antenna of the radar target simulator is further configured to receive from a second signal guider a signal that is output by the target simulator. In other words, the second signal guider can be configured to guide a signal from the target simulator to the antenna. The target simulator can output a signal to the second signal guider which can then guide the signal to the antenna. The antenna is further configured to radiate the signal such that it can be received by the radar under test.

Thus, the radar target simulator can generate a virtual target for testing a radar. For example, during a radar testing, the radar under test can radiate a signal, which will be referred as a measuring signal. The measuring signal radiated by the radar under test can be captured by the antenna of the radar target simulator. The measuring signal can be sent through the first signal guider to the target simulator. The target simulator, by modifying the measuring signal, can simulate at least one target property, such as, a distance of a target from the radar under test, a velocity of a target relative to the radar under test and a size of a target. Through the second signal guider the modified measuring signal (i.e. the measuring signal after being modified by the target simulator) can be sent from the target simulator to the antenna. The antenna can then transmit the modified measuring signal to the radar under test. The radar under test can measure the modified measuring signal and can estimate at least one target property. The measured target properties by the radar under test can be compared with simulated target properties and the comparison can be used to test the accuracy of the radar under test.

The radar target simulator according to the present invention further comprises a calibration port. The calibration port is configured to facilitate the calibration of the radar target simulator.

In general, the calibration of the radar target simulator may consist of measuring at least one unintended modification that can be caused to a signal while testing a radar. As discussed above, the radar target simulator can be configured to generate a virtual target for testing a radar under test. During testing of the radar under test a measuring signal generated by the radar under test can be received by the antenna of the radar target simulator, can be modified with at least one intended modification by the target simulator for generating the virtual target, and the modified measuring signal can be sent to the radar under test. However, the measuring signal while traversing from the radar under test to the target simulator and back to the radar under test can be further modified by unintended modifications that can be caused by signal guiders (guiding the measuring signal inside the radar target simulator), by internal components of the radar target simulator, by the antenna and/or by the measurement chamber (i.e. the environment wherein the testing of the radar under test is performed).

In contrast to the intended modifications performed by the target simulator to the measuring signal, the unintended modifications can be unknown. The calibration of the radar target simulator, facilitated by the calibration port, consists of measuring the unintended modifications. Hence, the unintended modifications can be compensated for when testing the radar under test, which can improve the accuracy of the radar testing.

The calibration port, according to the present invention, is provided at the intermediate frequency part of the radar target simulator. This is particularly advantageous, as it can allow the calibration of the radar target simulator to be performed with intermediate frequency signals and devices or measuring instruments configured to operate at the intermediate frequency. Generally, devices configured to operate at intermediate frequencies (which are typically significantly lower than radio frequencies) are less complex, small and comprise a high mobility compared to devices configured to operate at high radio frequencies.

In this regard, the calibration port provided at the intermediate frequency part, may allow for calibrating the radar target simulator on-site - i.e. on the measurement chamber wherein the radar testing is performed. In one hand this reduces the time required to perform the calibration of the radar target simulator, as the radar target simulator may not need to be removed from the measurement chamber. On the other hand, it lowers the risk of damaging the radar target simulator and/or the measurement chamber. Further still, performing the calibration without removing the radar target simulator from the measurement chamber may allow for a measurement of the unintended modifications added by the measurement chamber to the measuring signal. This is advantageous, particularly over conventional radar target simulator calibration means, which are typically performed at radio frequency and may generally require the removal of the radar target simulator from the measurement chamber or even transporting the radar target simulator to a specialized laboratory.

The calibration port provided at the intermediate frequency part, may further allow the use of less complex measurement devices that can be used for calibrating the radar target simulator. The measurement devices can be configured to operate at intermediate frequencies which are generally much lower than radio frequencies. The operation at intermediate frequencies can allow the measurement devices to be less complex and simple to use. For example, instead of comprising waveguides (generally used for guiding high frequency signals, such as, radio frequency signals), the measurement devices configured to operate at intermediate frequency can comprise coaxial cables as signal guiders. In this aspect, for example, connecting coaxial cables (e.g. connecting the measurement device to the calibration port) can be a simpler and less error prone task compared to connecting waveguides.

Hence, the calibration port provided at the intermediate frequency part can simplify the task of calibrating the radar target simulator. This may allow the calibration of the radar target simulator to be performed by the operators of the radar target simulator. This is advantageous, particularly over conventional radar target simulator calibration means, which usually require highly specialized professionals (e.g. capable of operating high frequency measurement devices) or even transporting the radar target simulator to specialized laboratories.

Thus, the present invention provides radar target simulator comprising a radio frequency part and an intermediate frequency part and wherein a calibration port configured for calibrating the radar target simulator is provided in the intermediate frequency part. The calibration port provided in the intermediate frequency part can simplify the task of calibrating a radar target simulator, may increase the accuracy of performing the calibration and can allow for the use of less complex measurement devices for calibrating the radar target simulator. This can encourage the operators of the radar target simulator to regularly or frequently perform the calibration of the radar target simulator which can contribute on improving the accuracy of the radar target simulator and radar testing.

In some embodiments, the intermediate frequency can be at least 1 GHz and at most 6 GHz. It will be noted, that the intermediate frequency range between 1 to 6 GHz is provided as a mere example and is not intended to be limiting. In general, the intermediate frequency range can comprise any range of frequencies typically lower than the radio frequencies. However, generally low intermediate frequencies may be advantageous as they can be more easily to operate, handle or process.

In some embodiments, the radio frequency can be at least 20 GHz and at most 130 GHz. In some embodiments, the radio frequency can be at least 20 GHz and at most 160 GHz. In some of such embodiments, the radio frequency can be between 24.05 GHz to 24.25 GHz. Alternatively, the radio frequency can be between 21.65 to 26.65 GHz.

Alternatively, the radio frequency can be between 76 to 77 GHz. Alternatively, the radio frequency can be between 77 to 81 GHz. That is, in some particular embodiments radio frequency can be configured to comprise the automotive radar frequency bands.

In some embodiments, the antenna can be configured to receive and radiate at least one electromagnetic signal with a bandwidth centered at the radio frequency. This can allow the antenna to send and receive signals to/from the radar under test.

In some embodiments, the antenna can be a horn antenna.

In some embodiments, the at least one intended modification applied by the target simulator can comprise delaying a signal that the target simulator can receive as input. This can allow the target simulator to simulate a distance of the target. More particularly, the delay that the target simulator can add to a measuring signal can be measured by the radar under test as a distance to a target. Alternatively or additionally, the target simulator can be configured for changing the frequency of a signal that the target simulator can receive as input. This can allow the target simulator to simulate a velocity of the target. More particularly, the frequency shift that the target simulator can perform to a measuring signal can be measured by the radar under test as a velocity of a target. Alternatively or additionally, the target simulator can be configured for attenuating or amplifying a signal that the target simulator can receive as input. This can allow the target simulator to simulate size of the target.

In some embodiments, the target simulator can be provided in the intermediate frequency part.

In some embodiments, the target simulator can be configured to receive a signal with a bandwidth centered at the intermediate frequency, apply at least one intended modification at the signal and output the signal after applying the at least one intended modification.

In some embodiments, the signal that can be output by the target simulator can comprise a bandwidth centered at the intermediate frequency.

In some embodiments, the first signal guider can comprise a first radio frequency signal guider that can be configured to guide a signal with a bandwidth centered at the radio frequency and a first intermediate frequency signal guider that can be configured to guide a signal with a bandwidth centered at the intermediate frequency. That is, the first signal guider that can be configured to guide a signal from the antenna to the target simulator can be composed of two signal guiders: a first radio frequency signal guider and a first intermediate frequency signal guider. For example, the first radio frequency signal guider can be a waveguide and the first intermediate signal guider can be a coaxial cable.

The radar target simulator can further comprise a frequency down converter. The frequency down converter can comprise an input port and an output port and can be configured to receive at the input port a signal with a bandwidth centered at the radio frequency, convert the frequency of the received signal at the input port from the radio frequency to the intermediate frequency and output the converted signal at the output port.

In such embodiments, the first radio frequency signal guider can be connected at the input port of the frequency down converter and the first intermediate frequency signal guider can be connected to the output port of the frequency down converter. The frequency down converter can be configured as an interface between the first radio frequency signal guider and the first intermediate frequency signal guider, converting the signals from the radio frequency to the intermediate frequency while passing the signal from the first radio frequency signal guider to the first intermediate frequency signal guider. In other words, the frequency down converter can be configured as an interface between the radio frequency part and the intermediate frequency part of the radar target simulator.

This can be advantageous in embodiments wherein the target simulator operates with intermediate frequency signals. That is, the target simulator may not directly modify radio frequency signals that can be received by the antenna. Thus, the frequency down converter can be provided between the signal path from the antenna to the target simulator and can convert the frequency of the signals received by the antenna from radio frequency to intermediate frequency before providing the signals to the target simulator. Further, the first signal guider can be configured to guide radio frequency signals from the antenna to the frequency down converter and to guide intermediate frequency signals from the frequency down converter to the target simulator.

In some embodiments, the second signal guider can comprise a second radio frequency signal guider configured to guide a signal with a bandwidth centered at the radio frequency and a second intermediate frequency signal guider configured to guide a signal with a bandwidth centered at the intermediate frequency. That is, the second signal guider that can be configured to guide a signal from the target simulator to the antenna can be composed of two signal guiders: a second intermediate frequency signal guider and a second radio frequency signal guider. For example, the second radio frequency signal guider can be a waveguide and the second intermediate signal guider can be a coaxial cable.

The radar target simulator can further comprise a frequency up converter. The frequency up converter can comprise an input port and an output port and can be configured to receive at the input port a signal with a bandwidth centered at the intermediate frequency, convert the frequency of the received signal at the input port from the intermediate frequency to the radio frequency and output the converted signal at the output port.

In such embodiments, the second intermediate frequency signal guider can be connected at the input port of the frequency up converter and the second radio frequency signal guider can be connected to the output port of the frequency up converter. The frequency up converter can be configured as an interface between the second intermediate frequency signal guider and the second radio frequency signal guider, converting the signals from the intermediate frequency to the radio frequency while passing the signal from the second intermediate frequency signal guider to the second radio frequency signal guider. In other words, the frequency up converter can be configured as an interface between the intermediate frequency part and the radio frequency part of the radar target simulator.

This can be advantageous in embodiments wherein the target simulator operates with intermediate frequency signals. That is, the target simulator may not directly modify radio frequency signals that can be received by the antenna. Thus, the frequency up converter can be provided between the signal path from the target simulator to the antenna and can convert the frequency of the signals output by the target simulator from the intermediate frequency to radio frequency before providing the signals to the target simulator. The antenna can then transmit the signals at the radio frequency. Further the second signal guider can be configured to guide intermediate frequency signals from target simulator to the frequency up converter and to guide radio frequency signals from the frequency up converter to antenna.

In some embodiments, the first signal guider and the second signal guider can comprise a common antenna signal guider and wherein the antenna signal guider can be connected to the antenna. The common antenna signal guider can be connected with the first and the second signal guider with a connector, such as, a circulator. The connector, can be configured to direct a signal received from the second signal guider to the common antenna connector and to direct a signal received from the common antenna connector to the first signal guider.

In other words, the radar target simulator may comprise a connector configured for connecting or interfacing at least three signal guiders. For example, the connector can have at least three ports wherein each port can be configured to be connected with a signal guider. A signal guider can be connected in one endpoint to the connector and on the other endpoint to the antenna. The first signal guider and the second signal guider can be connected on other respective ports of the connector. The connector can be configured to direct a signal coming from the second signal guider to the antenna signal guider and a signal coming from the antenna signal guider to the first signal guider. For example, the connector can be a circulator in which a signal entering any of its ports can be transmitted to the next port in rotation. A port in this context, can be a point where an external waveguide or transmission line (in general referred as signal guider), connects to the circulator.

In some embodiments, wherein the first signal guider comprises a first radio frequency signal guider and a first intermediate frequency signal guider, the calibration port can be connected to the first intermediate frequency signal guider.

Alternatively, in embodiments wherein the second signal guider comprises a second radio frequency signal guider and a second intermediate frequency signal guider, the calibration port can be connected to the second intermediate frequency signal guider.

That is, in general the calibration port can be configured to be connected with at least one signal guider of the radar target simulator configured to guide signals with intermediate frequency, such as, 1 to 6 GHz. Hence, the calibration port can allow to perform the calibration of the radar target simulator at the intermediate frequency domain (i.e. with intermediate frequency signals or devices configured to operate with intermediate frequency signals).

In some embodiments, the calibration port can be configured to be connected with at least one measurement device. The measurement device can be configured to operate at the intermediate frequency, such as, between 1 - 6 GHz. Generally, devices configured to operate at intermediate frequencies (which are typically significantly lower than radio frequencies) are less complex, small in size and comprise a high mobility.

The measurement device can comprise a network analyzer and the calibration port can be configured to be connected to the network analyzer. The network analyzer can typically be an instrument configured to measure the network parameters of an electrical network in the scalar (scalar network analyzer) or vector (vector network analyzer) form. Generally, network analyzers commonly measure s-parameters (also referred as scattering parameters) because reflection and transmission of electrical networks can be easy to measure, particularly at high frequencies. However, since the calibration port is provided at the intermediate frequency part of the radar target simulator, the network analyzer can be configured to operate at intermediate frequency. Thus, the network analyzer can be configured to measure other network parameters, such as y-parameters, z-parameters, and h-parameters with more ease. That is, it can be a less complex task to configure a network analyzer to measure other network parameters, such as, y-parameters, z-parameters, and h-parameters. This may provide more information for calibrating the radar target simulator.

For example, the network analyzer can be configured to generate a calibration signal with known signal parameters (e.g. time of generation, amplitude, power, phase) which can traverse a preconfigured calibration path (e.g. a signal path directing the signal through the internal components of the radar target simulator). Further, the network analyzer can be configured to receive measure at least one property (e.g. time of reception, amplitude, power, phase) of the calibration signal after the calibration signal traverses the calibration path. Based on the known properties of the generated signal and the measured properties of the received calibration signal (after it traverses the calibration path) an unintended modification that can be caused on a signal traversing the calibration path by the elements of the calibration path can be determined and can be used for calibrating the radar target simulator.

In some embodiments, the measurement device can comprise a signal generator and the calibration port can be configured to be connected to the signal generator. The signal generator can be advantageous as it may be configured to input a calibration signal at the radar target simulator through the calibration port.

In some embodiments, the measurement device can comprise a power meter and the calibration port can be configured to be connected to the power meter. The power meter can be configured to measure the power of a signal.

For example, in the calibration port the signal generator and the power meter can be connected. The signal generator can generate a calibration signal which can traverse a preconfigured calibration path (e.g. a signal path directing the signal through the internal components of the radar target simulator). The power meter can then measure the power of the calibration signal after the calibration signal traverses the calibration path. For example, a difference between the transmission power of the signal as generated by the signal generator and the received power as measured by the power meter can be used to determine the attenuation of the calibration path.

In some embodiments, the measurement device may consist of multiple devices, such as, a measurement instrument and a processing unit and/or memory device. For example, the measurement device may comprise a network analyzer and a processing unit, e.g. a computer, laptop, workstation, server, or the like, connected to the network analyzer. The processing unit can receive network measurement from the network analyzer and can facilitate calculating calibration parameters. In another example, the measurement device may comprise a network analyzer and a memory unit configured for data storage (e.g. a USB). The network analyzer can be configured to send data related to the measurements it performs (e.g. trace files) to the memory unit. The memory unit, which can preferably be a non-volatile storage device, may store the measurement data.

The radar target simulator can further comprise an intermediate frequency port in the intermediate frequency part.

In some embodiments, wherein the first signal guider comprises a first radio frequency signal guider and a first intermediate frequency signal guider, the intermediate frequency port can be connected to the first intermediate frequency signal guider. The connection between the intermediate frequency port and the first intermediate frequency signal guider can comprise an intermediate frequency port switch configured to connect and disconnect the intermediate frequency port from the first intermediate frequency signal guider.

In some embodiments, the radar target simulator can further comprise a radio frequency port in the radio frequency part.

In some embodiments wherein the radar target simulator comprises the connector, the radio frequency port can be further connected to the connector. That is, the connector can be configured for connection at least for signal guiders. For example, the connector can comprise a fourth port wherein the radio frequency port can be connected. The connector can be further configured to direct a signal received from the second signal guider to the radio frequency port. In some embodiments, the radio frequency port can be configured to be connected to a radio frequency measurement device, such as, a radio frequency power meter. This can be advantageous as it may allow for a power measurement of a signal in the radio frequency part.

In some embodiments the measurement device can be integrated into the radar target simulator. This can allow the calibration measurement to be performed, e.g., automatically, at short intervals, to check the stability of the radar target simulator. In such embodiments, it can be particularly advantageous to integrate the measurement device into the IF part of the radar target simulator by utilizing couplers and/or switches.

In a second embodiment a radar target simulator calibration method is disclosed. The method comprises providing a radar target simulator configured to generate a virtual target for testing a radar under test. The radar target simulator is provided according to first embodiment, as discussed above.

The method further comprises providing in the intermediate frequency part of the radar target simulator a calibration port and connecting a measurement device to the calibration port. This is particularly advantageous, as it can allow the calibration of the radar target simulator to be performed with intermediate frequency signals and the use of measurement devices configured to operate at the intermediate frequency.

In this regard, providing the calibration port at the intermediate frequency part of the radar target simulator, may allow for carrying out the method on sight - i.e. on the measurement chamber wherein the radar testing is performed. In one hand this can reduce the time required to carry out the method, as the radar target simulator may not need to be removed from the measurement chamber. On the other hand, it lowers the risk of damaging the radar target simulator and/or the measurement chamber. Further still, performing the calibration without removing the radar target simulator from the measurement chamber may allow for a measurement of the unintended modifications added by the measurement chamber to the measuring signal. This is advantageous, particularly over conventional radar target simulator calibration methods, which are typically performed at radio frequency and may generally require the removal of the radar target simulator from the measurement chamber or even transporting the radar target simulator to a specialized laboratory.

The calibration port provided at the intermediate frequency part, may further allow the use of less complex measurement devices that can be used for calibrating the radar target simulator. The measurement devices can be configured to operate at intermediate frequencies which are generally much lower than radio frequencies. For example, instead of using complex network analyzer configured for measuring radio frequency signals, simpler network analyzers configured for measuring signals at the intermediate frequency can be used. The operation at intermediate frequencies can allow the measurement devices to be less complex and simple to use. For example, instead of comprising waveguides (generally used for guiding high frequency signals, such as, radio frequency signals), the measurement devices configured to operate at intermediate frequency can comprise coaxial cables as signal guiders. In this aspect, for example, connecting coaxial cables (e.g. connecting the measurement device to the calibration port) can be a simpler and more error-proof task compared to connecting waveguides.

Hence, the calibration port provided at the intermediate frequency part can simplify the task of calibrating the radar target simulator. This may allow the calibration of the radar target simulator to be performed by the operators of the radar target simulator. This is advantageous, particularly over conventional radar target simulator calibration means, which usually require highly specialized professionals (e.g. capable of operating high frequency measurement devices).

Thus, the present invention provides a radar target simulator calibration method comprising providing at the intermediate frequency part of the radar target simulator a calibration port. The calibration port provided in the intermediate frequency part can simplify the task of calibrating a radar target simulator, may increase the accuracy of performing the calibration and can allow for the use of less complex measurement devices for calibrating the radar target simulator. This can encourage the operators of the radar target simulator to regularly or frequently perform the method of calibrating the radar target simulator which can contribute on improving the accuracy of the radar target simulator and radar under test testing.

The method further comprises generating with the measurement device a calibration signal with a bandwidth centered at the intermediate frequency. The calibration signal can be generated with known properties. For example, the time of generation, frequency, bandwidth, shape, amplitude, power, phase of the calibration signal as generated by the measurement device can be known or predefined.

Further the method comprises configuring a calibration path. The calibration path can be configured to allow the calibration signal to pass through predefined components or elements. The predefined components of the calibration path may include internal components of the radar target simulator, such as, signal guiders, target simulator, frequency converters, connectors, switches, etc. The predefined components of the calibration path may also include the antenna of the radar target simulator. The calibration path may also allow the signal to traverse through a portion of the environment wherein the radar target simulator can be positioned when measuring the radar under test. Said environment can be referred as a measurement chamber and can typically be an anechoic chamber.

The method further comprises the calibration signal traversing the calibration path. During this step, the calibration signal can be modified. That is, at least one property of the calibration signal, such as, frequency, bandwidth, shape, amplitude, power, phase can be changed - which change is caused by at least one component of the calibration path. The modifications of the calibration signal may comprise intended modification and unintended modifications. The intended modification can be caused by the target simulator of the radar target simulator configured to modify a signal that passes through it for generating a virtual target. The unintended modifications may include any other modification caused to the calibration signal while traversing the calibration path. Hence, the unintended modifications if not compensated may cause the radar target simulator to generate the virtual target differently than it intends or is configured to.

The method further comprises, calibrating the radar target simulator based on a difference between the calibration signal before and after traversing the calibration path. In this step, the unintended modifications caused by the calibration path to the calibration signal can be calculated, measured and/or estimated. Hence, the calibration of the radar target simulator may consist on defining a set of parameters used to compensate for the unintended modifications when the radar target simulator generates a virtual target. By calibrating the radar target simulator, i.e. by compensating for the unintended modification, the accuracy that the radar target simulator simulates properties of a target during testing of a radar under test can be improved.

In some embodiments, the calibration signal may traverse the calibration path a plurality of times. In such embodiments, the method can comprise calibrating the radar target simulator based on a difference between the calibration signal after traversing the calibration path once and after traversing the calibration path the plurality of times. In such embodiments, the RTS and more particularly the calibration path can be configured such that a signal may circulate in the calibration path. For example, the calibration path may be a closed loop. This can be realized, inter alia, by connecting the input calibration port with the output calibration port. For example, the measurement device can be coupled into the IF part of the RTS (e.g. using 2 couplers).

That is, in some embodiments a relative measurement can be performed by comparing the calibration signal after traversing the calibration path once with the calibration signal after traversing the calibrations path a plurality of times. The calibration signal can pass through the calibration path multiple times, e.g., by coupling the input calibration port with the output calibration port. This can simulate a target at multiple times the target distance. In such embodiments it can be advantageous to compare the calibration signal which passed the calibration path once (at single target distance) with the signal which passed the calibration path multiple times, e.g., twice (at multiple, e.g., double target distance). This can be particularly advantageous as the need to calibrate the measurement device can be alleviated.

That is, in some embodiments, the calibration signal can traverse the calibration path once. In such embodiments, the method can comprise, calibrating the radar target simulator based on a difference between the calibration signal before and after traversing the calibration path. Alternatively, the calibration signal can traverse the calibration path a plurality of times. In such embodiments, the method can comprise at least one of: calibrating the radar target simulator based on a difference between the calibration signal before and after traversing the calibration path and calibrating the radar target simulator based on a difference between the calibration signal after traversing the calibration path once and after traversing the calibration path the plurality of times.

In some embodiments, the measurement device may consist of multiple devices, such as, a measurement instrument and a processing unit and/or memory device. For example, the measurement device may comprise a network analyzer and a processing unit, e.g. a computer, laptop, workstation, server, or the like, connected to the network analyzer. The processing unit can receive network measurement from the network analyzer and can facilitate calculating calibration parameters. In another example, the measurement device may comprise a network analyzer and a memory unit configured for data storage (e.g. a USB). The network analyzer can be configured to send data related to the measurements it performs (e.g. trace files) to the memory unit. The memory unit, which can preferably be a non-volatile storage device, may store the measurement data.

In some embodiments, the intermediate frequency can be at least 1 GHz and at most 6 GHz.

In some embodiments, the radio frequency can be at least 20 GHz and at most 130 GHz. In some embodiments, the radio frequency can be at least 20 GHz and at most 160 GHz. In some of such embodiments, the radio frequency can be between 24.05 GHz to 24.25 GHz. Alternatively, the radio frequency can be between 21.65 to 26.65 GHz. Alternatively, the radio frequency can be between 76 to 77 GHz. Alternatively, the radio frequency can be between 77 to 81 GHz. That is, in some particular embodiments radio frequency can be configured to comprise the automotive radar frequency bands.

In some embodiments, the method can comprise the measurement device generating the calibration signal and outputting the calibration signal to a first endpoint of the calibration path. The first endpoint of the calibration path can be an input port of the calibration path, for example, an input port provided by the calibration port. For example, the input port of the calibration path can be configured to be connected with an output port of a measurement device. Hence, the measurement device may output the calibration signal through its output port and the calibration signal may be input to the calibration path through the input port of calibration path.

The method can further comprise, the measurement device receiving the calibration signal at a second endpoint of the calibration path after the calibration signal traverses the calibration path. The second endpoint of the calibration path can be an output port of the calibration path, for example, an output port provided by the calibration port. For example, the output port of the calibration path can be configured to be connected with an input port of a measurement device. Hence, the calibration signal after traversing the calibration path can be output from the calibration path through the output port of the calibration path and the calibration signal may be received by the measurement device through the input port of the measurement device.

The method can further comprise the measurement device recording or storing a first timestamp indicating the time the measurement device generates and outputs the calibration signal in the first endpoint of the calibration path. The method can further comprise, recording or storing a second timestamp indicating the time the measurement device receives the calibration signal at a second endpoint of the calibration path after the calibration signal traverses the calibration path. Further the method can comprise determining a time delay for the calibration signal to traverse the calibration path based on a difference between the first timestamp and the second timestamp and calibrating the radar target simulator based on the determined time delay. For example, the calculation of the time delay for the calibration signal to traverse the calibration path can be performed by a processing unit comprised by the measurement device (e.g. connected to measurement instrument or comprised by the measurement instrument).

The method can further comprise the measurement device recording or storing a first frequency indicating the frequency the measurement device generates and outputs the calibration signal in the first endpoint of the calibration path. The method can further comprise, recording or storing a second frequency indicating the frequency the measurement device receives the calibration signal at a second endpoint of the calibration path after the calibration signal traverses the calibration path. Further the method can comprise determining a frequency shift caused to the calibration signal while traversing the calibration path based on a difference between the first frequency and the second frequency and calibrating the radar target simulator based on the determined frequency shift. For example, the calculation of the frequency shift caused to the calibration signal while traversing the calibration path can be performed by a processing unit comprised by the measurement device (e.g. connected to measurement instrument or comprised by the measurement instrument).

The method can further comprise the measurement device recording or storing a first power indicating the power the measurement device generates and outputs the calibration signal in the first endpoint of the calibration path. The method can further comprise, recording or storing a second power indicating the power the measurement device receives the calibration signal at a second endpoint of the calibration path after the calibration signal traverses the calibration path. Further the method can comprise determining an attenuation caused to the calibration signal while traversing the calibration path based on a difference between the first power and the second power and calibrating the radar target simulator based on the determined attenuation. For example, the calculation of the attenuation caused to the calibration signal while traversing the calibration path can be performed by a processing unit comprised by the measurement device (e.g. connected to measurement instrument or comprised by the measurement instrument).

In some embodiments, the calibration path can comprise an internal calibration path allowing the calibration signal to traverse at least one internal component of the radar target simulator. This can facilitate the calculation of at least one unintended modification that can be caused by the at least one internal component of the radar target simulator.

The at least one internal component of the radar target simulator is at least one of: the target simulator, a frequency up converter, a connector, a frequency down converter, the calibration port and respective signal guiders configured to guide signals, such as, the calibration signals, between two connected internal components of the radar target simulator.

For example, the calibration signal may traverse from the measurement device to the target simulator and then to the frequency up converter and then to the connector which directs the calibration signal to the frequency down converter and then to the measurement device and through respective signal guiders configured to guide signals, such as, the calibration signals, between any two connected internal components of the radar target simulator. That is, the calibration signal performs a round trip through the internal components of the radar target simulator.

The internal calibration path may thus allow determining the time delay, frequency shift and/or attenuation caused by the at least one internal component of the radar target simulator. Further, the internal calibration path may facilitate determining the unintended time delay, frequency shift and/or attenuation caused by the at least one internal component of the radar target simulator. Alternatively or additionally, the internal calibration path may facilitate measuring a frequency response of at least one internal component of the radar target simulator, which can represent the relation between the gain (or attenuation) versus frequency. Alternatively or additionally, the calibration measurement may comprise measuring a noise figure, which can indicate the increase of noise in the signal caused by at least one internal component of the RTS. Thus, the unintended modification caused by the at least one internal component of the radar target simulator can be used to calibrate the radar target simulator (e.g. compensate their effects) during testing of a radar under test

In some embodiments, the calibration path comprises an antenna calibration path allowing the calibration signal to traverse at least one internal component of the radar target simulator and the antenna.

Configuring the antenna path may preferably comprise providing a reflector element in front of the antenna, such that, it reduces or blocks the radiation of the calibration signal by the antenna and wherein the reflector element is configured to comprise a high reflection coefficient, such as, a reflection coefficient of at least 0.9. That is, the reflector element can be configured to "short circuit" the antenna. Hence, the calibration signal instead of being radiated by the antenna can be reflected back by the reflector element. This can allow the calibration signal to perform a round trip through the internal components of the radar target simulator and through the antenna.

For example, the calibration signal can traverse from the measurement device to the target simulator and then to the frequency up converter and then to the connector which direct the calibration signal to the antenna and then to the reflector element which reflects the calibration signal, and then to the connector which directs the calibration signal to the to the frequency down converter and then to the measurement device and through respective signal guiders configured to guide signals, such as, the calibration signals, between any two connected internal components of the radar target simulator.

The antenna calibration path can thus allow to determine the combined time delay, combined frequency shift and/or combined attenuation caused by the at least one internal component of the radar target simulator and the antenna.

Further, measuring or using an already calculated time delay, frequency shift and/or attenuation caused by the at least one internal component of the radar target simulator (which can be calculated by allowing the calibration signal to traverse the internal calibration path only, as discussed above) and the combined time delay, frequency shift and/or attenuation caused by the at least one internal component of the radar target simulator and the antenna, the time delay, frequency shift and/or attenuation caused only by the antenna can be calculated. That is, a combination of calibrating measurements performed using the internal calibration path and the antenna calibration path may allow for the calculation of modifications caused only by the antenna of the radar target simulator. This can be advantageous as it may allow to locate where the main unintended modifications are being performed to the calibration signal - whether it is the antenna or the at least one internal component of the radar target simulator.

In some embodiments, the calibration path can comprise a chamber calibration path allowing the calibration signal to traverse at least one internal component of the radar target simulator, the antenna and through a portion of the measurement chamber. The measurement chamber can be the environment wherein the radar target simulator and the radar under test are positioned for testing of the radar under test.

Configuring the chamber calibration path may preferably comprise providing a reference target in front of the antenna and at a distance from the antenna, such as, 50 to 200 cm, preferably at a position wherein the radar under test is provided when the radar target simulator tests the radar under test. In other words, the calibration path may allow for a round trip of the calibration signal through the internal components of the radar target simulator, the antenna and the measurement chamber. To put simply, the chamber calibration path may be the same path or similar to the path a measuring signal generated by the radar under test during its testing can follow (not including the path of the signal inside the radar under test).

For example, the calibration signal can traverse from the measurement device to the target simulator and then to the frequency up converter and then to the connector which direct the calibration signal to the antenna which radiates the calibration signal to a portion of the measurement chamber and wherein the radiated calibration signal hits the reference target which reflects the radiated calibration signal which is then received by the antenna and then to the connector which directs the calibration signal to the to the frequency down converter and then to the measurement device and through respective signal guiders configured to guide signals, such as, the calibration signals, between any two connected internal components of the radar target simulator.

The chamber calibration path can thus allow to determine the combined time delay, combined frequency shift and/or combined attenuation caused by the at least one internal component of the radar target simulator and the antenna and the measurement chamber.

Further, measuring or using an already calculated time delay, frequency shift and/or attenuation caused by the at least one internal component of the radar target simulator (which can be calculated by allowing the calibration signal to traverse the internal calibration path only, as discussed above) and the combined time delay, frequency shift and/or attenuation caused by the at least one internal component of the radar target simulator and the antenna and the measurement chamber, the time delay, frequency shift and/or attenuation caused by the antenna and the measurement chamber can be calculated. Similarly, measuring or using an already calculated time delay, frequency shift and/or attenuation caused by the at least one internal component of the radar target simulator and the antenna and using the combined time delay, combined frequency shift and/or combined attenuation caused by the at least one internal component of the radar target simulator and the antenna and the measurement chamber, the time delay, frequency shift and/or attenuation caused by the measurement chamber can be calculated. Thus, a calibration of the radar target simulator considering the effects of the calibration chamber can be performed and allowed by the present invention.

In a third embodiment, a system configured to calibrate a radar target simulator comprising a radar target simulator according to the first embodiment and a measurement device connected with the radar target simulator at the calibration port of the radar target simulator and wherein the measurement device is used to calibrate the radar target simulator according to the method of the second embodiment is disclosed.

In some embodiments of the system, the radar target simulator and the measurement device can be integrated into a single device.

In a forth embodiment, a system configured to calibrate a radar target simulator comprising a radar target simulator according to the first embodiment and a measurement device integrated into the radar target simulator and connected to the calibration port of the radar target simulator and wherein the measurement device is used to calibrate the radar target simulator according to the method of the second embodiment is disclosed.

**Numbered Embodiments**

Below further numbered embodiments of the invention will be discussed.

Below, device embodiments will be discussed. These embodiments are abbreviated by the letter "D" followed by a number. Whenever reference is herein made to "device embodiments", these embodiments are meant.

D1. A radar target simulator (10) configured to generate a virtual target for testing a radar under test (90) comprising:

a radio frequency part (20) configured to operate with signals at a radio frequency; and

an intermediate frequency part (40) configured to operate with signals at an intermediate frequency; and

a target simulator (50) configured to receive a signal, apply at least one intended modification at the signal and output the signal after applying the at least one intended modification;

an antenna (30) configured to

receive a signal radiated by the radar under test (90) and
send the signal through a first signal guider to the target simulator (50) and
receive from a second signal guider a signal that is output by the target simulator (50) and
radiate the signal such that it can be received by the radar under test (90);

a calibration port (62) connected at the intermediate frequency part (40).

---------------------------------- Frequency definitions ----------------------------------

D2. A radar target simulator (10) according to the preceding device embodiment, wherein the intermediate frequency is lower than the radio frequency, such as, at least 1 GHz and at most 6 GHz.

D3. A radar target simulator (10) according to any of the preceding device embodiments, wherein the radio frequency is at least 20 GHz and at most 130 GHz.

D3A. A radar target simulator (10) according to any of the preceding device embodiments, wherein the radio frequency is at least 20 GHz and at most 160 GHz.

D4. A radar target simulator (10) according to the preceding device embodiment, wherein the radio frequency is between 24.05 GHz to 24.25 GHz.

D5. A radar target simulator (10) according to embodiment D3, wherein the radio frequency is between 21.65 to 26.65 GHz.

D6. A radar target simulator (10) according to embodiment D3, wherein the radio frequency is between 76 to 77 GHz.

D7. A radar target simulator (10) according to embodiment D3, wherein the radio frequency is between 77 to 81 GHz.

-------------------------------------- Antenna ------------------------------------

D8. A radar target simulator (10) according to any of the preceding device embodiments, wherein the antenna (30) is configured to receive and radiate at least one electromagnetic signal with a bandwidth centered at the radio frequency.

D9. A radar target simulator (10) according to any of the preceding device embodiments, wherein the antenna (30) is a horn antenna (30).

------------------------------------ Target Simulator ------------------------------------

D10. A radar target simulator (10) according to any of the preceding device embodiments, wherein the at least one intended modification applied by the target simulator (50) comprises at least one of:

delaying the signal;

changing the frequency of the signal;

attenuating the signal.

D11. A radar target simulator (10) according to the preceding device embodiment, wherein the target simulator (50) is provided in the intermediate frequency part (40).

D12. A radar target simulator (10) according to the preceding device embodiment, wherein the target simulator (50) is configured to receive a signal with a bandwidth centered at the intermediate frequency, apply at least one intended modification at the signal and output the signal after applying the at least one intended modification.

D13. A radar target simulator (10) according to the preceding device embodiment, wherein the signal that is output by the target simulator (50) comprises a bandwidth centered at the intermediate frequency.

---------------------------------- Frequency Down Conversion -----------------------------------

D14. A radar target simulator (10) according to any of the preceding device embodiments, wherein the first signal guider comprises
a first radio frequency signal guider configured to guide a signal with a bandwidth centered at the radio frequency; and
a first intermediate frequency signal guider configured to guide a signal with a bandwidth centered at the intermediate frequency.

D15. A radar target simulator (10) according to any of the preceding device embodiments, further comprising a frequency down converter (24) comprising an input port and an output port and wherein the frequency down converter (24) is configured to
receive at its input port a signal with a bandwidth centered at the radio frequency;
convert the frequency of the received signal at its input port from the radio frequency to the intermediate frequency;
output the converted signal at its output port.

D16. A radar target simulator (10) according to the 2 preceding device embodiments, wherein the first radio frequency signal guider is connected at the input port of the frequency down converter (24) and the first intermediate frequency signal guider is connected to the output port of the frequency down converter (24).

---------------------------------- Frequency Up Conversion -----------------------------------

D17. A radar target simulator (10) according to any of the preceding device embodiments, wherein the second signal guider comprises
a second radio frequency signal guider configured to guide a signal with a bandwidth centered at the radio frequency; and
a second intermediate frequency signal guider configured to guide a signal with a bandwidth centered at the intermediate frequency.

D18. A radar target simulator (10) according to any of the preceding device embodiments, further comprising a frequency up converter (42) comprising an input port and an output port and wherein the frequency up converter (42) is configured to
receive at its input port a signal with a bandwidth centered at the intermediate frequency;
convert the frequency of the received signal at its input port from the intermediate frequency to the radio frequency;
output the converted signal at its output port.

D19. A radar target simulator (10) according to the 2 preceding device embodiments, wherein the second radio frequency signal guider is connected at the output port of the frequency up converter (42) and the second intermediate frequency signal guider is connected to the input port of the frequency up converter (42).

--------------------------------------- Antenna Connector -----------------------------------

D20. A radar target simulator (10) according to any of the preceding device embodiments, wherein the first signal guider and the second signal guider comprise a common antenna signal guider and wherein the antenna signal guider is connected to the antenna (30).

D21. A radar target simulator (10) according to the preceding device embodiment, wherein the common antenna signal guider is connected with the first and the second signal guider with a connector (26), such as, a circulator (26) or coupler (26).

D22. A radar target simulator (10) according to the preceding device embodiment, wherein the connector (26), such as, the circulator 26 or couple (26), is configured to direct a signal received from the second signal guider to the common antenna connector and to direct a signal received from the common antenna connector to the first signal guider.

------------------------------------- Calibration port -----------------------------------

D23. A radar target simulator (10) according to any of the preceding device embodiments and with the features of embodiment D14, wherein the calibration port (62) is connected to the first intermediate frequency signal guider.

D24. A radar target simulator (10) according to any of the preceding device embodiments and with the features of embodiment D17, wherein the calibration port (62) is connected to the second intermediate frequency signal guider.

D25. A radar target simulator (10) according to any of the preceding device embodiments, wherein the calibration port (62) is configured to be connected with at least one measurement device (60).

For example, the measurement device can be coupled to the calibration port, e.g., using 2 couplers. In such embodiments a first coupler may allow the measuring device to sample (i.e. measure) a signal in the calibration port and a second coupler may allow the measurement device to provide a signal to the calibration port.

D26. A radar target simulator (10) according to the preceding device embodiment, wherein the measurement device (60) is configured to operate at the intermediate frequency, such as, between 1 - 6 GHz.

D27. A radar target simulator (10) according to the preceding device embodiment, wherein the measurement device (60) comprises a network analyzer (60) and the calibration port (62) is configured to be connected to the network analyzer (60).

D28. A radar target simulator (10) according to the preceding device embodiment, wherein the measurement device (60) comprises a signal generator and the calibration port (62) is configured to be connected to the signal generator (60).

D29. A radar target simulator (10) according to the preceding device embodiment, wherein the measurement device (60) comprises a power meter (60) and the calibration port (62) is configured to be connected to the power meter (60).

--------------------------------------------- IF port ---------------------------------------

D30. A radar target simulator (10) according to any of the preceding device embodiments, further comprising an intermediate frequency port (44) in the intermediate frequency part (40).

D31. A radar target simulator (10) according to the preceding device embodiment and with the features of embodiment D14, wherein the intermediate frequency port (44) is connected to the first intermediate frequency signal guider.

D32. A radar target simulator (10) according to the preceding device embodiment, wherein the connection between the intermediate frequency port (44) and the first intermediate frequency signal guider comprises an intermediate frequency port couple (46) configured to couple the intermediate frequency port (44) to the first intermediate frequency signal guider.

--------------------------------------------- RF port ---------------------------------------

D33. A radar target simulator (10) according to any of the preceding device embodiments, further comprising a radio frequency port (72) in the radio frequency part (20).

D34. A radar target simulator (10) according to the preceding device embodiment and with the features of embodiment D21, wherein the radio frequency port (72) is further connected to the connector (26).

D35. A radar target simulator (10) according to the preceding device embodiment, wherein the connector (26) is further configured to direct a signal received from the second signal guider to the radio frequency port (72).

D36. A radar target simulator (10) according to any of the 3 preceding device embodiments, wherein the radio frequency port (72) is configured to be connected to a radio frequency measurement device, such as, a radio frequency power meter.

-------------------------------------- Multiple Targets --------------------------------------

D37. A radar target simulator (10) according to any of the preceding device embodiments, wherein the target simulator (50) is configured to simulate a plurality of virtual targets.

D38. A radar target simulator (10) according to the preceding device embodiments, wherein the target simulator (50) is configured to simulate a plurality of targets by applying multiple delays to the received signal.

-------------------------------------- Integrated measurement device --------------------------------------

D39. A radar target simulator according to any of the preceding device embodiments and with the features of embodiment D25, wherein the measurement device (60) is integrated into the radar target simulator.
That is, the measurement device can be provided internal to the radar target simulator.
Below, method embodiments will be discussed. These embodiments are abbreviated by the letter "M" followed by a number. Whenever reference is herein made to "method embodiments", these embodiments are meant.

M0. A radar target simulator calibration method comprising:

(a) providing a radar target simulator (10) configured to generate a virtual target for testing a radar under test (90) comprising:

a radio frequency part (20) configured to operate with signals at a radio frequency; and
an intermediate frequency part (40) configured to operate with signals at an intermediate frequency; and
a target simulator (50) configured to receive a signal, apply at least one intended modification at the signal and output the signal after applying the at least one intended modification;
an antenna (30) configured to
receive a signal radiated by the radar under test (90) and
send the signal through a first signal guider to the target simulator (50) and
receive from a second signal guider a signal that is output by the target simulator (50) and
radiate the signal such that it can be received by the radar under test (90);

(b) providing in the intermediate frequency part (40) of the radar target simulator (10) a calibration port (62);

(c) connecting a measurement device (60) to the calibration port (62);

(d) generating with the measurement device (60) a calibration signal with a bandwidth centered at the intermediate frequency;

(e) configuring a calibration path;

(f) the calibration signal traversing the calibration path;

(g) calibrating the radar target simulator (10) based on a difference between the calibration signal before and after traversing the calibration path.

M0A. A method according to the preceding embodiment wherein the calibration signal traversing the calibration path comprises the calibration signal traversing the calibration path a plurality of times.

For example, the input calibration port and the output calibration port can be short circuited.

M0B. A method according to the preceding embodiment, wherein the method comprises calibrating the radar target simulator (10) based on a difference between the calibration signal after traversing the calibration path once and after traversing the calibration path the plurality of times.

M0C. A method according to any of the 2 preceding embodiments, wherein the method comprises
the measurement device (60) recording at least one of a first timestamp, a first frequency and a first signal power of the calibration signal after traversing the calibration path once;
the measurement device (60) recording at least one of a second timestamp, a second frequency and a second signal power of the calibration signal after traversing the calibration path the plurality of times.

M0D. A method according to the preceding embodiment, wherein the method comprises determining at least one of

- a time delay for the calibration signal to traverse the calibration path based on a difference between the first timestamp and the second timestamp;
- a frequency shift of the calibration signal based on a difference between the first frequency and the second frequency;
- an attenuation of the calibration signal based on a difference between the first signal power and the second signal power;
- a noise figure indicating a noise added to the calibration signal while traversing the calibration path; and
- a frequency response indicating a relation between the attenuation versus frequency of the calibration signal while traversing the calibration path.

M0E. The method according to the preceding embodiment and with the features of embodiment M0B, wherein calibrating the radar target simulator (10) comprises
calibrating the radar target simulator (10) based on at least one of the determined time delay, the determined frequency shift, the determined attenuation, the determined noise figure and the determined frequency response.

M1. A radar target simulator calibration method comprising:

(a) providing a radar target simulator (10) configured to generate a virtual target for testing a radar under test (90) comprising:

a radio frequency part (20) configured to operate with signals at a radio frequency; and
an intermediate frequency part (40) configured to operate with signals at an intermediate frequency; and
a target simulator (50) configured to receive a signal, apply at least one intended modification at the signal and output the signal after applying the at least one intended modification;
an antenna (30) configured to
receive a signal radiated by the radar under test (90) and
send the signal through a first signal guider to the target simulator (50) and
receive from a second signal guider a signal that is output by the target simulator (50) and
radiate the signal such that it can be received by the radar under test (90);

(b) providing in the intermediate frequency part (40) of the radar target simulator (10) a calibration port (62);

(c) connecting a measurement device (60) to the calibration port (62);

(d) generating with the measurement device (60) a calibration signal with a bandwidth centered at the intermediate frequency;

(e) configuring a calibration path;

(f) the calibration signal traversing the calibration path;

(g) calibrating the radar target simulator (10) based on a difference between the calibration signal before and after traversing the calibration path.

---------------------------------- Frequency definitions ----------------------------------

M2. A method according to any of the preceding method embodiments, wherein the intermediate frequency is lower than the radio frequency, such as, at least 1 GHz and at most 6 GHz.

M3. A method according to any of the preceding method embodiments, wherein the radio frequency is at least 20 GHz and at most 130 GHz.

M3A. A method according to any of the preceding method embodiments, wherein the radio frequency is at least 20 GHz and at most 160 GHz.

M4. A method according to the preceding method embodiment, wherein the radio frequency is between 24.05 GHz to 24.25 GHz

M5. A method according to embodiment M3, wherein the radio frequency is between 21.65 to 26.65 GHz.

M6. A method according to embodiment M3, wherein the radio frequency is between 76 to 77 GHz.

M7. A method according to embodiment M3, wherein the radio frequency is between 77 to 81 GHz.

------------------------------------- Connections --------------------------------------------

M8. A method according to any of the preceding method embodiments, wherein the step of providing the radar target simulator (10) comprises providing the radar target simulator (10) according to any of the preceding device embodiments.

M9. A method according to any of the preceding method embodiments, wherein the step of providing in the intermediate frequency part of the radar target simulator (10) a calibration port (62) comprises providing the calibration port (62) according to any of the device embodiments D23 to D29.

M9A. A method according to any of the preceding method embodiments, wherein the step of providing in the intermediate frequency part of the radar target simulator (10) a calibration port (62) comprises providing the calibration port (62) according to embodiment D39.

------------------------------------- Calibrating Measurements -----------------------------------

M10. A method according to any of the preceding method embodiments, the method comprising

the measurement device (60) in step (d) generating the calibration signal and outputting the calibration signal to a first endpoint of the calibration path and

the measurement device (60) receiving the calibration signal at a second endpoint of the calibration path after the calibration signal traverses the calibration path.

M11. A method according to the preceding embodiment, the method further comprising the measurement device (60)

recording a first timestamp indicating the time the measurement device (60) generates the calibration signal and outputs the calibration signal in a first endpoint of the calibration path and

recording a second timestamp indicating the time the measurement device (60) receives the calibration signal at a second endpoint of the calibration path after the calibration signal traverses the calibration path and

determining a time delay for the calibration signal to traverse the calibration path based on a difference between the first timestamp and the second timestamp and

calibrating the radar target simulator (10) based on the determined time delay.

M12. A method according to any of the 2 preceding embodiments, the method further comprising the measurement device (60)

recording a first frequency indicating the frequency of the calibration signal as generated by the measurement device (60) and

recording a second frequency indicating the frequency of the calibration signal as received by the measurement device (60) after the calibration signal traverses the calibration path and

determining a frequency shift of the calibration signal based on a difference between the first frequency and the second frequency and

calibrating the radar target simulator (10) based on the determined frequency shift.

M13. A method according to any of the 3 preceding embodiments, the method further comprising the measurement device (60)

recording a first signal power indicating the power of the calibration signal as generated by the measurement device (60) and

recording a second signal power indicating the power of the calibration signal as received by the measurement device (60) after the calibration signal traverses the calibration path and

determining an attenuation of the calibration signal based on a difference between the first signal power and the second signal power and

calibrating the radar target simulator (10) based on the determined attenuation.

--------------------------------- Internal Calibration Path ---------------------------------

M14. A method according to any of the preceding method embodiments wherein the calibration path comprises an internal calibration path allowing the calibration signal to traverse at least one internal component of the radar target simulator (10).

M15. A method according to the preceding embodiment, wherein the at least one internal component of the radar target simulator (10) is at least one of:
the target simulator (50), a frequency up converter (42), a connector (26), a frequency down converter (24), the calibration port (62) and respective signal guiders configured to guide signals, such as, the calibration signals, between two connected internal components of the radar target simulator (10).

M16. A method according to the preceding embodiment, wherein the calibration signal traverses
from the measurement device (60) to the target simulator (50) and then to the frequency up converter (42) and then to the connector (26) which directs the calibration signal to the frequency down converter (24) and then to the measurement device (60)
and through respective signal guiders configured to guide signals, such as, the calibration signals, between any two connected internal components of the radar target simulator (10).

M17. A method according to any of the 3 preceding embodiments and with the features of embodiment M11, wherein the method comprises determining the time delay caused by the at least one internal component of the radar target simulator (10).

M18. A method according to any of the 4 preceding embodiments and with the features of embodiment M12, wherein the method comprises determining the frequency shift caused by the at least one internal component of the radar target simulator (10).

M19. A method according to any of the 5 preceding embodiments and with the features of embodiment M13, wherein the method comprises determining the attenuation caused by the at least one internal component of the radar target simulator (10).

-------------------------------- Antenna Calibration Path --------------------------------

M20. A method according to any of the preceding method embodiments wherein the calibration path comprises an antenna calibration path allowing the calibration signal to traverse at least one internal component of the radar target simulator (10) and the antenna (30).

M21. A method according to the preceding embodiment, wherein the at least one internal component of the radar target simulator is at least one of:
the target simulator (50), a frequency up converter (42), a connector (26), a frequency down converter (24), the calibration port (62) and respective signal guiders configured to guide signals, such as, the calibration signals, between two connected internal components of the radar target simulator (10).

M22. A method according to any of the 2 preceding embodiments, the method comprising providing a reflector element (64) in front of the antenna, such that, it reduces or blocks or reflects back the radiation of the calibration signal by the antenna (30) and wherein the reflector element is configured to comprise a high reflection coefficient, such as, a reflection coefficient of at least.

M23. A method according to the 2 preceding embodiments, wherein the calibration signal traverses
from the measurement device (60) to the target simulator (50) and then to the frequency up converter (42) and then to the connector (26) which direct the calibration signal to the antenna (30) and then to the reflector element (64) which reflects the calibration signal, and then to the connector (26) which directs the calibration signal to the to the frequency down converter (24) and then to the measurement device
and through respective signal guiders configured to guide signals, such as, the calibration signals, between any two connected internal components of the radar target simulator (10) and antenna (30).

M24. A method according to any of the 4 preceding embodiments and with the features of embodiment M11, wherein the method comprises determining the time delay caused by the at least one internal component of the radar target simulator (10) and the antenna (30).

M25. A method according to the preceding embodiment and with the features of embodiment M17, wherein the method comprises determining a time delay caused by the antenna (30) based on the time delay caused by the at least one internal component of the radar target simulator (10) and the time delay caused the at least one internal component of the radar target simulator (10) and the antenna (30).

M26. A method according to any of the 5 preceding embodiments and with the features of embodiment M12, wherein the method comprises determining the frequency shift caused by the at least one internal component of the radar target simulator (10) and the antenna (30).

M27. A method according to the preceding embodiment and with the features of embodiment M18, wherein the method comprises determining a frequency shift caused by the antenna (30) based on the frequency shift caused by the at least one internal component of the radar target simulator (10) and the frequency shift caused the at least one internal component of the radar target simulator (10) and the antenna (30).

M28. A method according to any of the 6 preceding embodiments and with the features of embodiment M13, wherein the method comprises determining the attenuation caused by the at least one internal component of the radar target simulator (10) and the antenna (30).

M29. A method according to the preceding embodiment and with the features of embodiment M19, wherein the method comprises determining an attenuation caused by the antenna (30) based on the attenuation caused by the at least one internal component of the radar target simulator (10) and the attenuation caused the at least one internal component of the radar target simulator (10) and the antenna (30).

-------------------------------- Chamber Calibration Path --------------------------------

M30. A method according to any of the preceding method embodiments wherein the calibration path comprises a chamber calibration path allowing the calibration signal to traverse at least one internal component of the radar target simulator (10) and the antenna (30) and through a portion of the measurement chamber wherein the measurement chamber is the environment wherein the radar target simulator (10) and the radar under test (90) are positioned for testing of the radar under test (90).

M31. A method according to the preceding embodiment, wherein the at least one internal component of the radar target simulator (10) is at least one of:
the target simulator (50), a frequency up converter (42), a connector (26), a frequency down converter (24), the calibration port (62) and respective signal guiders configured to guide signals, such as, the calibration signals, between two connected internal components of the radar target simulator (10).

M32. A method according to any of the 2 preceding embodiments, the method comprising providing a reference target in front of the antenna and at a distance from the antenna, such as, 50 to 200 cm, preferably at a position wherein the radar under test (90) is provided when the radar target simulator (10) tests the radar under test (90).

M33. A method according to the 2 preceding embodiments, wherein the calibration signal traverses
from the measurement device (60) to the target simulator (50) and then to the frequency up converter (42) and then to the connector (26) which directs the calibration signal to the antenna (30) which radiates the calibration signal to a portion of the measurement chamber and wherein the radiated calibration signal hits the reference target (64) which reflects the radiated calibration signal which is then received by the antenna (30) and then to the connector (26) which directs the calibration signal to the frequency down converter (24) and then to the measurement device (60) and through respective signal guiders configured to guide signals, such as, the calibration signals, between any two connected internal components of the radar target simulator (10) and the antenna (30).

M34. A method according to any of the 4 preceding embodiments and with the features of embodiment M11, wherein the method comprises determining the time delay caused by the at least one internal component of the radar target simulator (10) and the antenna (30) and the portion of the measurement chamber traversed by the calibration signal.

M35. A method according to the preceding embodiment and with the features of embodiment M24, wherein the method comprises determining a time delay caused by the portion of the measurement chamber traversed by the calibration signal based on the time delay caused by the at least one internal component of the radar target simulator (10) and the antenna (30) and the time delay caused the at least one internal component of the radar target simulator (10) and the antenna (30) and the portion of the measurement chamber traversed by the calibration signal.

M36. A method according to any of the 5 preceding embodiments and with the features of embodiment M12, wherein the method comprises determining the frequency shift caused by the at least one internal component of the radar target simulator (10) and the antenna (30) and the portion of the measurement chamber traversed by the calibration signal.

M37. A method according to the preceding embodiment and with the features of embodiment M26, wherein the method comprises determining a frequency shift caused by the portion of the measurement chamber traversed by the calibration signal based on the frequency shift caused by the at least one internal component of the radar target simulator (10) and the antenna (30) and the frequency shift caused the at least one internal component of the radar target simulator (10) and the antenna (30) and the portion of the measurement chamber traversed by the calibration signal.

M38. A method according to any of the 6 preceding embodiments and with the features of embodiment M13, wherein the method comprises determining the attenuation caused by the at least one internal component of the radar target simulator (10) and the antenna (30) and the portion of the measurement chamber traversed by the calibration signal.

M39. A method according to the preceding embodiment and with the features of embodiment M28, wherein the method comprises determining an attenuation caused by the portion of the measurement chamber traversed by the calibration signal based on the attenuation caused by the at least one internal component of the radar target simulator (10) and the antenna (30) and the attenuation caused the at least one internal component of the radar target simulator (10) and the antenna (30) and the portion of the measurement chamber traversed by the calibration signal.

---------------------------------- Reflector on antenna connector -------------------------

M40. A method according to any of the preceding embodiments, wherein the radar target simulator (10) comprises an antenna connector and the method comprises connecting the antenna (30) with the antenna connector.

M41. A method according to the preceding embodiments, wherein the antenna connector comprises a waveguide flange.

M42. A method according to any of the 2 preceding embodiments, wherein the step of connecting the antenna (30) to the antenna connector comprises screwing the antenna (30) to the antenna connector.

M43. A method according to any of the 3 preceding embodiments, wherein the step of configuring a calibration path comprises
removing the antenna (30) from the radar target simulator (10),
providing a reflector element (64) on the antenna connector.

M44. A method according to any of the 4 preceding embodiments, wherein an internal calibration path is created and the step if creating the internal calibration path comprises:
removing the antenna (30) from the radar target simulator (10),
providing a reflector element (64) on the antenna connector.

M45. A method according to any of the 2 preceding embodiments, wherein the step of providing a reflector element (64) on the antenna connector comprises short-circuiting the antenna connector.

Below, system embodiments will be discussed. These embodiments are abbreviated by the letter "S" followed by a number. Whenever reference is herein made to "system embodiments", these embodiments are meant.

S1. A system configured to calibrate a radar target simulator comprising:

a radar target simulator (10) according to any of the preceding device embodiments;

a measurement device (60) connected with the radar target simulator (10) at the calibration port (62) of the radar target simulator (10) and

wherein the measurement device (60) is used to calibrate the radar target simulator (10) according to any of the preceding method embodiments.

S2. The system according to the preceding embodiment wherein the measurement device (60) and the radar target simulator (10) are integrated into a single device.

S3. A system configured to calibrate a radar target simulator comprising:

a radar target simulator (10) according to any of the preceding device embodiments;

a measurement device (60) integrated into the radar target simulator (10) and connected to a calibration port (62) of the radar target simulator (10) and

wherein the measurement device (60) is used to calibrate the radar target simulator (10) according to any of the preceding method embodiments.

**Brief description of the drawings**

Figure 1          depicts a schematic of a radar target simulator and a radar under test;

Figure 2          depicts a schematic of a radar target simulator comprising an intermediate frequency calibration port according to an embodiment of the present invention;

Figure 3a - 3e    illustrate different setups for calibrating the radar target simulator according to embodiments of the present invention;

Figure 4          depicts a schematic of a radar target simulator comprising an intermediate frequency calibration port according to an embodiment of the present invention;

Figure 5          depicts a schematic of a radar target simulator comprising an integrated measurement device according to an embodiment of the present invention;

Figure 6          depicts a flowchart of methods of calibrating the radar target simulator.

**Detailed description of the drawings**

In the following, exemplary embodiments of the invention will be described, referring to the figures. These examples are provided to give further understanding of the invention, without limiting its scope.

In the following description, a series of features and/or steps are described. The skilled person will appreciate that unless required by the context, the order of features and steps is not critical for the resulting configuration and its effect. Further, it will be apparent to the skilled person that irrespective of the order of features and steps, the presence or absence of time delay between steps can be present between some or all of the described steps.

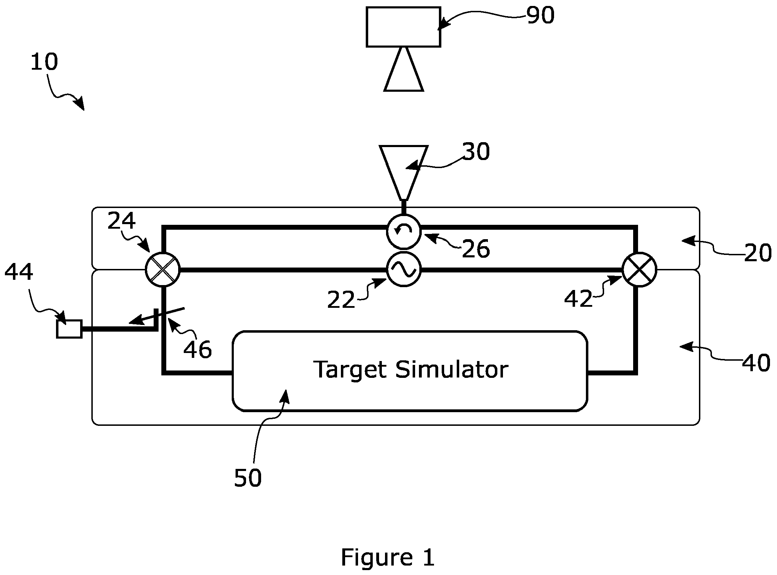

**Fig. 1** depicts a schematic of a radar target simulator (RTS) 10. More particularly, in Fig. 1 a preferred radar target simulator 10 that can be calibrated by the present invention is provided.

The radar target simulator 10 can comprise an antenna 30, a radio frequency (RF) part 20 and an intermediate frequency (IF) part 40. For the sake of brevity, the radar target simulator 10 can also be referred to as RTS.

Generally, during testing of a radar 90, referred as the radar under test 90 (or for the sake of brevity as RUT), the radar under test 90 can be positioned in front of the RTS. More particularly, the RUT can be positioned facing the antenna 30 of the RTS. Even more particularly, the RUT and RTS can be positioned such that a line-of-sight transmission can be achieved between the two.

In some embodiments, the radar under test 90 can be an automotive radar 90. That is, the RUT can be configured to operate in the automotive radar frequency bands, such as, with frequencies between 20 - 130 GHz or 20 - 160 GHz, such as, the 24 GHz narrow-band (NB) spanning between 24.05 GHz to 24.25 GHz, the 24 GHz ultra-wide band (UWB) spanning between 21.65 to 26.65 GHz, the automotive long-range radar (LRR) band spanning between 76 to 77 GHz and the automotive short-range radar (SRR) band spanning between 77 to 81 GHz.

The antenna 30 can be configured for receiving signals generated by the RUT. For example, the antenna 30 and the RUT can be configured to transmit and receive electromagnetic signals of the same frequency range(s). In some embodiments, it can be sufficient that the frequency range supported by the antenna 30 of the RTS and the frequency range supported by the antenna of the RUT can intersect.

In some embodiments, the antenna 30 can be modular. That is, the antenna 30 can be (easily) replaceable or in other words, the antenna 30 can be releasably attached to the RTS. The antenna 30 and the RTS can be configured such that the antenna 30 can be releasably attached to the RTS by exerting a twisting and/or pushing force on the antenna 30 (and/or on the RTS). Similarly, the antenna 30 and the RTS can be configured such that the antenna 30 can be detached from the RTS by exerting a twisting and/or pulling force on the antenna 30 (and/or on the RTS). Typically, the RTS can comprise a connector configured to facilitate joining sections of a waveguide. For example, the RST can comprise a waveguide flange. The antenna 30 can be connected to the RTS through the said connecter. For example, the antenna 30 can be screwed to the waveguide flange of the RTS. This can provide a secure attachment of the antenna 30 at the RTS and also an efficient transmittal of the electromagnetic waves to the antenna 30. In addition, the antenna 30 can be easily removed from the RTS e.g. by un-screwing the antenna 30 from the waveguide flange.

This can facilitate changing or replacing the antenna 30 of the RTS. For example, the RTS can be set to operate in the 24 GHz ISM band and use a first antenna 30 configured to support this band (i.e. transmit and/or receive electromagnetic waves with frequencies on the said band). The same RTS can be set to operate in the 77/79 GHz automotive radar band and the first antenna 30 can be replaced by a second antenna 30 that is configured to support the 77/79 GHz automotive radar band.

The RF signals received by the antenna 30 can be transmitted to the RF part 20 of the RTS. The RF part 20 of the RTS can be configured to operate (or handle) signals with frequencies in the radio-frequency domain, which are generally high frequency signals, such as, signals with frequencies of at least 20 GHz and at most 130 GHz or at least 20 GHz and at most 160 GHz, such as between 24.05 GHz to 24.25 GHz or 21.65 to 26.65 GHz or 76 to 77 GHz or 77 to 81 GHz. The antenna 30 can be connected with the RF part 20 of the RTS through the use of a signal guider, which can be referred as an antenna signal guider. The antenna signal guider can be configured for guiding high frequency signals.

A signal guider can be a structure configured to guide electromagnetic waves. A signal guider may for example be a coaxial cable, optical fiber and/or a waveguide (depending on the operating frequency).

The connection between the antenna 30 and the RF part 20 can be further facilitated using a connector 26, such as, a circulator 26 or coupler 26. That is, as also depicted in the figure, the antenna signal guider can be connected in one of its endpoints to the antenna 30 and on the other endpoint to the connector 26. It will be noted that for the purpose of not overloading the drawings with numerals number (which can decrease the clarity of the drawings), the signal guiders (such as, the antenna signal guider) are not assigned referral numbers.

The connector 26 can be a multi-port device in which a signal entering any port is directed to at least one predefined port. A port of the connector 26 can be a point (or part) where an external signal guider (e.g. waveguide or coaxial cable), connects to the connector 26. In Fig. 1, the connector 26 can be realized as a 3-port circulator 26. Each port is connected to a signal guider leading to the antenna 30, a frequency down converter 24 and a frequency up converter 42. The circulator can be configured to direct any signal entering from the port that leads to the frequency up converter 42 to the port that leads to the antenna 30. Similarly, the circulator 26 can be configured to direct any signal entering from the port that leads to the antenna 30 to the port that leads to the frequency down converter 24. That is, the circulator directs the signals in a circular fashion.

Thus, a signal that can be received by the antenna 30 can be directed to a frequency down converter 24. The connector 26 and the frequency down converter 24 can be connected by a respective signal guider, which can be referred as a CFDC (connector to frequency down converter) signal guider. That is, the CFDC signal guider can be connected on one of its endpoints to a port of the connector 26 and on the other endpoint to the input port of the frequency down converter 24. The first radio frequency signal guider can be configured to guide a radio frequency signal from the connector 26 to the frequency down converter 24. In some embodiments, the CFDC signal guider can be a waveguide.

That is, a signal can be guided from the antenna 30 to the frequency down converter 24 by a signal guider which can be referred to as a first radio frequency signal guider. In some embodiments, the first radio frequency signal guider can comprise the antenna signal guider and the CFDC signal guider.

The frequency down converter 24 can be configured to convert the received RF signal to an intermediate frequency. Generally, the intermediate frequency can be lower, typically significantly lower, than the radio frequency. For example, the radio frequency can be between 24 to 130 GHz or between 24 GHz to 160 GHz and the intermediate frequency can be between 1 to 6 GHz. It will be noted, that the intermediate frequency range between 1 to 6 GHz is provided throughout the description as a mere example and is not intended to be limiting. In general, the intermediate frequency range can comprise any range of frequencies typically lower than the radio frequencies. However, generally low intermediate frequencies may be advantageous as they can be more easily to operate, handle or process.

The frequency down converter 24 can be connected by a respective signal guider, which can be referred as a first intermediate signal guider, with a target simulator 50. The first intermediate signal guider can be a transmission line configured for transmitting IF frequencies (e.g. 1 - 6 GHz), such as, a coaxial cable or optical fiber. That is, the first intermediate signal guider can be connected in one of its endpoints with the output port of the frequency down converter 24 and on the other endpoint with the input port of the target simulator 50. Thus, the first intermediate signal guider can guide a signal from the frequency down converter 24 to the target simulator.

In other words, a signal can be guided from the antenna 30 to the target simulator 50 by a signal guider which can be referred as a first signal guider. In some embodiments, the first signal guider can comprise the first radio frequency signal guider and the first intermediate frequency signal guider.

In the first intermediate frequency signal guider an IF port 44 can be provided. Further, an IF port coupler 46 can be configured to couple the IF port 44 to the first intermediate frequency signal guider. More particularly, the IF port coupler 46 can be configured to control the amount of power that can be transferred to the IF port 44. That is, the IF port coupler 46 can be configured to open-circuit the IF port 44, thus no power is transmitted to the IF port 44. The IF port 46 can be configured to allow only a portion of the power of the signal to be transmitted to the IF port 44. Thus, a signal can be split by the IF port coupler 46 such that it can be simultaneously provided to the IF port 44 and the target simulator. The IF port 46 can also be configured to open-circuit the path towards the target simulator 50, such that, all the power of a signal can be transmitted to the IF port 44.

The IF port 44 can be used to measure the transmit signal of the RUT. In some embodiments, the IF port 44 can be utilized to perform a power measurement therein. The power measurement can facilitate determining the transmit power of the RUT. In some embodiments, the IF port 44 can be utilized to perform a spectrum measurement therein. The spectrum measurements can facilitate determining the transmit spectrum of the RUT. In some embodiments, the IF port 44 can be utilized to perform a signal analysis which can facilitate determining or measuring the quality of the signal transmitted by the RUT.

The target simulator 50 can receive from the frequency down converter 24 an IF signal. The IF signal is the frequency down converted signal of the RF signal transmitted by the RUT and received by the antenna 30 of the RTS. The target simulator 50 can be configured to simulate target properties, such as, distance (by adding a time delay to the IF signal), relative velocity (by shifting the frequency of the IF signal), and size (by attenuating the IF signal). That is, the target simulator performs intended modifications on the IF signal, such as, delaying, frequency shifting and/or attenuation.

The required delay ($\tau$) to simulate a specific distance (D) can be calculated based on the following relation:

$$\tau = \frac{2D - D_{offset}}{c}$$

In the above relation, c denotes the speed of light in a medium (e.g. air) and $D_{offset}$ can be a compensating parameter (e.g. a positive number) configured to compensate for the distance between the RUT and the RTS and the transmission lines inside the RTS. For example, $D_{offset}$ can indicate the length of the path (i.e. signal guiders) from the antenna 30 to the input of the target simulator 50 and from the output of the target simulator 50 to the antenna 30. If negligible $D_{offset}$ can be set to zero.

The Doppler effect can be used to determine the frequency shift ($\Delta f$) required to simulate a specific relative velocity ($\Delta v$) between the RUT and the virtual target. The calculation of the required frequency shift ($\Delta f$) to simulate a specific relative velocity ($\Delta v$) can be based on the following relation:

$$\Delta f = 2\frac{\Delta v}{c}f_0.$$

In the above relation, c denotes the speed of light in a medium (e.g. air) and $f_0$ denotes the frequency of the emitted measuring signal by the RUT. The multiplicative constant 2 is present based on the rationale that for radar applications the Doppler shift appear twice, that is, during transmission and receiving path.

The radar target simulator can also be configured to generate virtual targets with different sizes. For example, the radar target simulator can be configured to simulate virtual targets with different radar cross-sections (RCS). Generally, the RCS depends on size, material, shape, orientation and surface smoothness of the object to be detected by the radar. If all the other factors are kept the sample, the RCS increases with the size of the object. This is because the larger the object the larger is the portion of the power of the radar signal that is reflected back to the radar. As such, the RTS can attenuate the radar measuring signal to simulate a target with a specific size.

The RTS can further be configured to calculate a required attenuation to generate a target with a specific RCS (and thus with a specific size). The RCS can depend on an offset value ($A_{offset}$) and the attenuation (A) caused to the radar signal by the RTS. For example, the RCS can be calculated based on the following relation:

$$RCS[dBsm] = A_{offset}[dBsm] - A[dB].$$

The offset value ($A_{offset}$) can be a pre-calculated value based on antenna gain, simulated distance to the target distance between the RTS and RUT, internal attenuation of the RTS and frequency of the radar signal. Based on the above relation, given a specific RCS (to be simulated) the required attenuation (A) can be calculated.

The output of the target simulator 50 can be connected with a frequency up converter 42 using a respective signal guider, which can be referred as a second intermediate frequency signal guider. The second intermediate frequency signal guider can be a transmission line configured for transmitting IF frequencies (e.g. 1 - 6 GHz), such as, a coaxial cable or optical fiber.

The frequency up converter 42 can be configured to convert the IF signal to RF frequency. The frequency up converter 42 can be configured as an interface between the IF part 40 and the RF part 20 of the RTS. It converts and transmits the signals from the IF part 40 to the RF part 20.

The modified signal can then be guided from the frequency up converter 42 to the connector 26 by a respective signal guider, which can be referred as the FUCC (frequency up converter to connector) signal guider, connecting the frequency up converter 42 to one of the ports of the connector 26. The FUCC signal guider can be configured for transmitting RF signals, generally high frequency signals, such as, signals with a frequency between 20 - 130 GHz or between 20 - 160 GHz. The FUCC signal guider can be a waveguide.

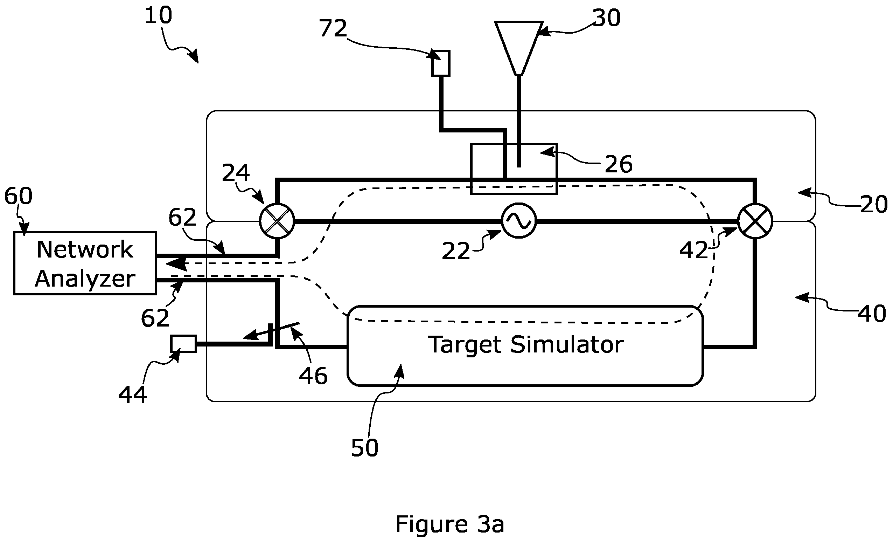

The use of the connector 26, particularly of a circulator 26 or coupler 26, can be advantageous as the signal coming from the frequency up converter 42 can be guided to the antenna 30 and the received signal from the antenna 30 can be guided to the frequency down converter. Moreover, the connector 26 (e.g. a circulator 26 or coupler 26) may comprise a defined leakage. For example, when guiding the signal from the frequency up converter to the antenna 30, part of the power of the signal may leak towards the frequency down converter 24. This can be used to create the internal component calibration path that is discussed with reference to Fig. 3a, for a calibration of the RTS. Moreover, the connector 26 can be configured such that the leaked power can be adjusted or pre-set. This can further facilitate creating the internal component calibration path that is discussed with reference to Fig. 3a, for a calibration of the RTS.

The connector 26 can direct the modified signal to the antenna 30, which can then transmit the signals over-the-air using the antenna 30. More particularly, the modified signal can be guided from the connector 26 to the antenna 30 by the antenna signa guider.

That is, the modified signal can be guided from the frequency up converter 42 to the antenna 30 by a second radio frequency signal guider. In some embodiments, the second radio frequency signal guider can comprise the second antenna signal guider and the FUCC signal guider. In some embodiments, the first radio frequency signal guider and the second radio frequency signal guider can comprise a common antenna guider.

In other words, a signal can be guided from the target simulator 50 to the antenna 30 by a signal guider which can be referred as a second signal guider. In some embodiments, the second signal guider can comprise the second radio frequency signal guider and the second intermediate frequency signal guider.

The RUT can receive the modified signal and can measures target properties such as distance, velocity and/or size of the target. The RUT measurements can be compared with the known values (i.e. simulated distance, velocity and/or size of the target) to determine error of the radar measurements and/or to calibrate the RUT.

To reduce reflections and errors that can be induced by the reflections, the RUT and the RTS can be placed in an anechoic chamber (not shown). That is, the measurement environment or measurement chamber wherein the radar testing is performed can be an anechoic chamber. Further, the RUT can be placed on a positioning system (not shown) that can be configured to rotate the RUT according to at least one central axis of the RUT. This can be advantageous as the RUT can be tested under different angles of transmission/arrival. In other words, different parts of the radiation pattern of the radar can be tested.

The RTS can further comprise a local oscillator 22 that can be connected to the frequency down converter 24 and frequency up converter 42. The local oscillator can facilitate the operation of the frequency down converter 24 and frequency up converter 42. Alternatively, the RTS can comprise two local oscillators 22, one connected to the frequency down converter 24 and the other connected to the frequency up converter 42. The two local oscillators 22 can be synchronized with the sample reference frequency.

It should be noted that Fig. 1 provides a general schematic view of some components of the RTS. Fig. 1 intends to provide a general description of an RTS. The RTS calibration system and method provided by the present invention can also be used for other configurations of RTS devices and are not only limited to the configuration of Fig. 1.

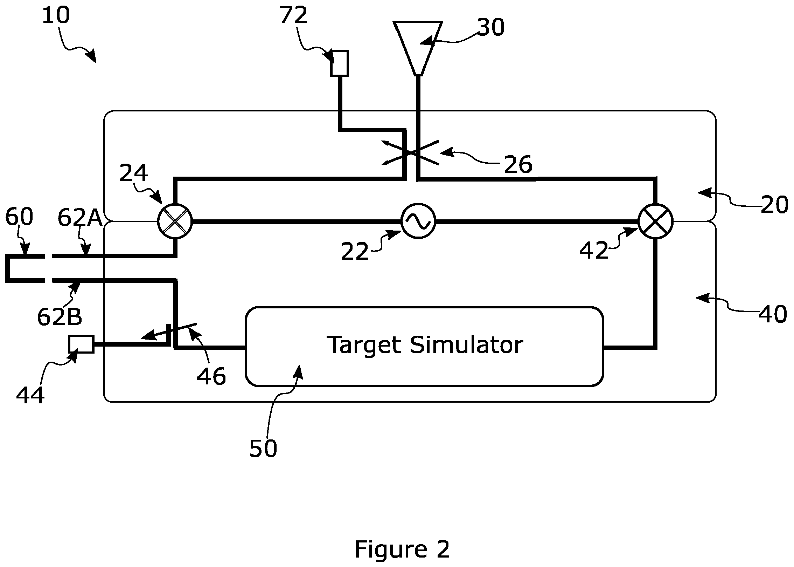

**Fig. 2** depicts an embodiment of an RTS with IF calibration possibility. That is, instead of performing the calibration of the RTS in the RF domain, the present invention allows for calibrating the RTS at the low intermediate frequency (e.g. 1 - 6 GHz). Thus, simpler and cost-effective measurement devices that are not necessarily configured to operate with high frequencies can be used. Furthermore, the RTS with IF calibration possibility as depicted in Fig. 2 (and the calibration setups depicted in Figs. 3a to 3d) can also provide the possibility to perform the calibration in the measurement chamber wherein the radar testing is performed. Hence, the RTS need not be removed from the measurement chamber (wherein RUT testing is performed) for the RTS calibration process.

The RTS depicted in Fig. 2 can further comprise a calibration port 62. The calibration port 62 can be positioned in the signal guider between the frequency down converter 24 and the target simulator 50. Alternatively or additionally, the calibration port 62 can be provided in the signal guider between the target simulator 50 and the frequency up converter 42. The calibration port 62 can be configured to provide two ports, an input calibration port 62B (which for the sake of brevity can be referred to as an input port 62B) and an output calibration port 62A (which for the sake of brevity can be referred to as an output port 62A). The input port 62B may allow to induce an IF signal into the IF part 40 of the RTS, such as to send an IF signal to the target simulator 50. The output port 62A can be configured to extract a signal from the IF part 40 of the RTS.

In some embodiments the calibration port 62 can be realized by interrupting the signal guider between the frequency down converter 24 and the target simulator 50. This can provide two endpoints (in the interrupted section) which can be used as the input port 62A and output port 62B respectively. This embodiment is depicted in Fig. 2. Thus, the signal needs to pass through the calibration port 62 before reaching the target simulator 50. In a normal operation mode of the RTS (i.e. when the RTS is used for testing a RUT as depicted in Fig. 1) the calibration port 62 may be short circuited (i.e. the output port 62A connected to the input port 62B). Thus, a signal can pass uninterrupted by the calibration port 62 between the frequency down converter 24 and the target simulator 50.

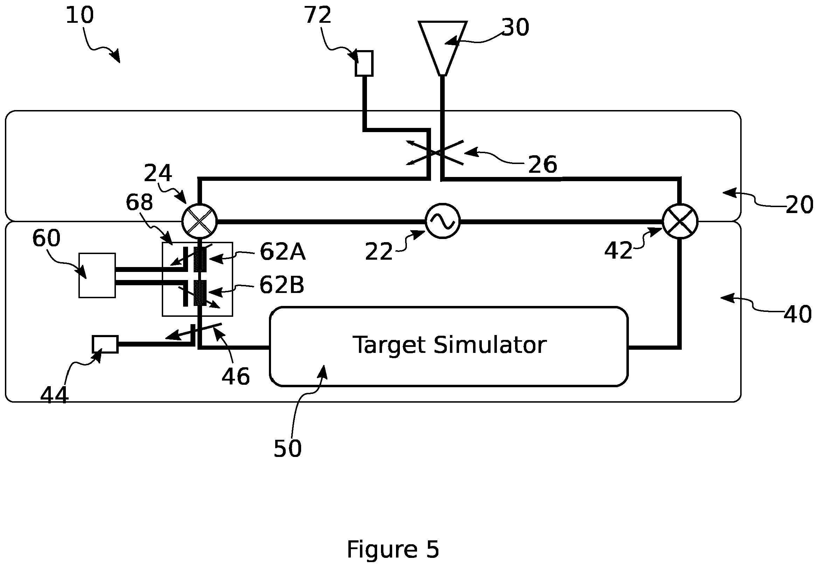

Otherwise, for calibrating the RTS the calibration port 62 is not short-circuited. Instead a calibration bridge 60 can be realized by connecting a measurement device 60 to the calibration port 62. For example, an output port of the measurement device 60 can be connected with the input port 62B and an input port of the measurement device 60 can be connected with the output port 62A. In some embodiments, e.g., see Fig. 5, the measurement device 60 can be integrated into the radar target simulator 10.

In some embodiments, the connection of the calibration port 62 to the signal guider between the frequency down converter 24 and the target simulator 50 can be facilitated by the use of a switch, circulator and/or coupler (not shown). The switch, circulator and/or coupler can be configured to control the signal path either from the frequency down converter 24 directly to the target simulator 50 uninterrupted (e.g. when the RTS is used for testing a RUT) or to activate the calibration port 62 (i.e. allow the signal to pass from the measurement device 60 to the target simulator 50 and from the frequency down converter 24 to the measurement device 60).

Further, the RTS can comprise an RF port 72. The RF port 72 can be provided in the RF part 20 of the RTS. More particularly, the RF port 72 can be connected either directly or indirectly (i.e. through the connector 26, such as, the coupler 26) with the frequency upconverter 42.

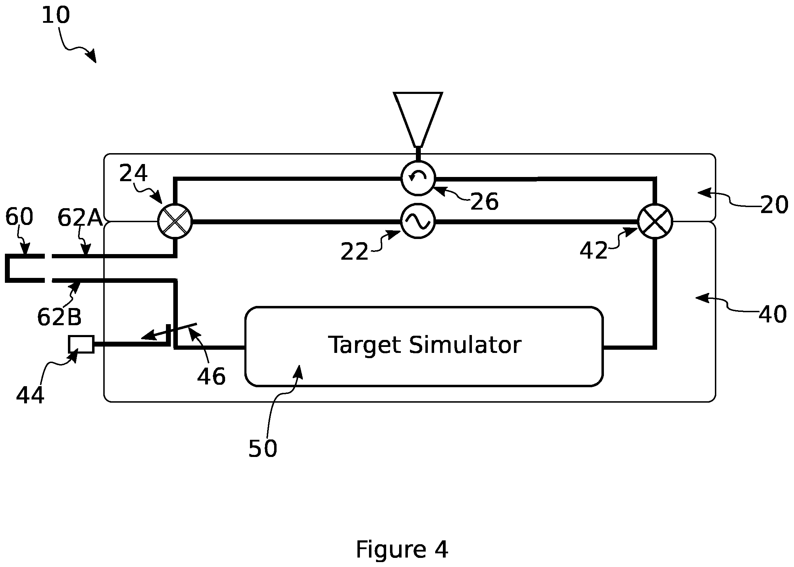

The RF port 72 is an optional component of RTS. For example, **Fig. 4** illustrates an embodiment of the RTS with IF calibration possibility that does not comprise the RF port 72.

With reference to Figs. 3a to 3d exemplary calibration measurements for calibrating the radar target simulator 10 will be described. In general, the calibration of the RTS can comprise connecting a measurement device 60 to the calibration port 62 and creating particular calibrating signal paths. For each calibrating signal path, a respective calibrating measurement can be performed. Some exemplary calibrating measurement and calibrating signal paths are discussed with reference to Figs. 3a to 3d.

Figs. 3a to 3e illustrate exemplary calibration measurements wherein the measurement device 60 is external to the radar target simulator 10. It will be understood that the exemplary calibration measurements can similarly be performed by embodiments of the present invention wherein the measurement device 60 is integrated into the radar target simulator 10 (e.g., see Fig. 5). For the sake of brevity, respective figures for each of the exemplary calibration measurements of Figs. 3a to 3e wherein the measurement device 60 is integrated into the radar target simulator 10 are omitted.

In **Fig. 3a,** a network analyzer 60 can be connected to the calibration port 62. The network vector analyzer 60 can be configured to operate at intermediate frequencies, such as, frequencies between 1 - 6 GHz. Such network vector analyzers 60 can be portable devices with high mobility and generally small in size. Generally, measurement devices 60 required for performing measurements at low frequencies (e.g. 1 - 6 GHz) are less complex, small in size, have a high mobility and a low cost. As the calibration of the RTS, according to the present invention, can be performed at the intermediate frequencies (e.g. 1 - 6 GHz), less complex measurement devices 60 can be utilized.

The high mobility and the small size of the measurement device 60 can be advantageous as it allows the calibration of the RTS on sight (i.e. at the measurement chamber wherein the RTS preforms the radar testing). This not only simplifies the calibration process but also reduces the need of removing the RTS from the measurement chamber. Hence, the risk of damaging the RTS is reduced and the calibration can be performed faster.

Furthermore, the low complexity of the measurement device 60 can also be associated with easy operation capabilities. That is, they may not need highly trained people for operating them. Hence, the calibration of the RTS can be simplified and the process can be carried out by the staff normally operating the RTS without the need of requiring the help of highly trained specialists. As a result, the operators of the RTS may be more encouraged to perform the calibrations more frequently. This is further enabled by the fact that the cost of the measurement devices 60 is low (or at least lower than the cost of measurement devices required for high frequency measurements at the RF domain). As a result, the time and cost efficiency and accuracy of radar testing can be improved.

In a first calibration measurement as illustrated in Fig. 3a, the influence of the internal components of RTS except from the antenna 30 on the measuring signal can be measured. More particularly, the delay, attenuation, frequency distortion, impedance, gain that can be induced by the internal components of the RTS to a signal passing through the internal components of the RTS can be measured. Measuring the above effects will be referred for brevity throughout the text as a calibration measurement (or interchangeably as calibrating measurement). That is, a calibration measurement may comprise measuring at least one of delay, attenuation, frequency distortion, impedance, gain. Alternatively or additionally, the calibration measurement may comprise measuring a frequency response of the RTS, which can represent the relation between the gain (or attenuation) versus frequency. Alternatively or additionally, the calibration measurement may comprise measuring a noise figure, which can indicate the increase of noise in the signal caused by the RTS.

For performing a calibration measurement of the internal components of the RTS an internal component calibration path as illustrated by the dashed arrow in Fig. 3a can be created. The internal component calibration path can be created such that a signal can pass through the internal components of the RTS.

A calibrating (or reference) signal can be generated by the network vector analyzer 60. The calibrating signal can pass from the network analyzer 60 through the target simulator 50, then through the frequency up converter 42, then through the frequency downconverter 24 and be returned to the network analyzer 60. To create the internal component calibration path, the connector 26 can be configured to isolate the antenna 30 and create a signal path from the frequency up converter 42 to the signal down converter 24 - as illustrated in Fig. 3a.

The calibrating signal generated by the network analyzer 60 can be modified by the target simulator 50. These modifications can be referred as intended modifications and they can consist of modification performed to a signal for simulating target properties. In some embodiments, during the calibration of the RTS the target simulator 50 can be configured not to intentionally modify the signal - i.e. not to simulate a target. For example, the intended delay, frequency shift and attenuation can be set to zero.

The calibration signal that can be generated by the network analyzer 60, as depicted by the signal path illustrated in Fig. 3a can also pass on other components of the RTS, such as, the internal transmission lines, frequency up converter 24, coupler 26, frequency down converter 24. Thus, further modifications can be performed on the calibrating signal. These modifications can be referred as undesired or unintended modifications. The unintended modifications may include additional delay, frequency shifting, distortion and attenuation. Unintended modification may also be introduced by errors of the target simulator 50. For example, the target simulator 50 may delay, attenuate and/or shift the frequency of the signal with a different value then intended to (or configured to). Such unintended modifications of the signal introduced by the target simulator can be referred as errors of the target simulator 50.

Said unintended modifications from the internal components of the RTS and errors of the target simulator can be measured by setting the RTS and the network analyzer 60 as described above, i.e. allowing the signal path to traverse the internal component calibration path. That is, the target simulator 50 can be set to modify the signal with a known delay, frequency shift and attenuation. A reference signal can be generated by the network analyzer 60. The reference signal transmitting time and/or transmitting frequency (e.g. center frequency) and/or transmitting bandwidth and/or transmitting power can be recorded and are generally referred as reference signal transmitting parameters. That is, information or parameters (i.e. the reference signal transmitting parameters) about the reference signal (also referred as calibrating signal) is known. For example, the network analyzer 60 can be configured to generate a signal at a predefined time and/or with a predefined frequency (e.g. center frequency) and/or bandwidth and/or power - i.e. with predefined reference signal transmitting parameters.

The calibrating signal can pass through the signal path as illustrated by and described with reference to Fig. 3a and the signal can experience intended and unintended modifications.

In some embodiments, the target simulator 50 can be set or configured to perform no modification on the signal (i.e. time delay, frequency shift and attenuation can be set to zero).

Then the calibrating signal can be received by the network analyzer 60, wherein at least one of its parameters is recorded, such as, at least one of reference signal receiving time, receiving frequency (e.g. center frequency), receiving bandwidth and receiving attenuation - which can be generally referred as reference signal receiving parameters.

The reference signal transmitting parameters can be compared with reference signal receiving parameters to determine at least one unintended modification induced by the RTS internal components. If the target simulator 50 is configured to modify the signal information regarding intended modification can further be used to determine or calculate the unintended modifications.

For example, the below relation can be used to calculate the unintended modifications:

$$Unintended\ Delay = Receiving\ Timestamp - Transmitting\ Timestamp - Intended\ Delay$$

$$Unintended\ Frequency\ Shift$$
$$= Receiving\ Frequency - Transmitting\ Frequency - Intended\ Frequency\ Shift$$

$$Unintended\ Attenuation$$
$$= Receiving\ Attenuation - Transmitting\ Attenuation - Intended\ Atteunation$$

It will be noted that the above relations are only exemplary. Other relations may be used and other parameters may be calculated as well. For example, a further parameter may be the unintended phase shift of the reference signal. In general, any difference between the reference signal as generated and transmitted by the network analyzer 60 and the reference signal as received by the network analyzer 60 can be used to measure the influences of the internal components of the RTS, wherein the reference or calibrating signal traverses a path as illustrated by and described with reference to Fig. 3a.

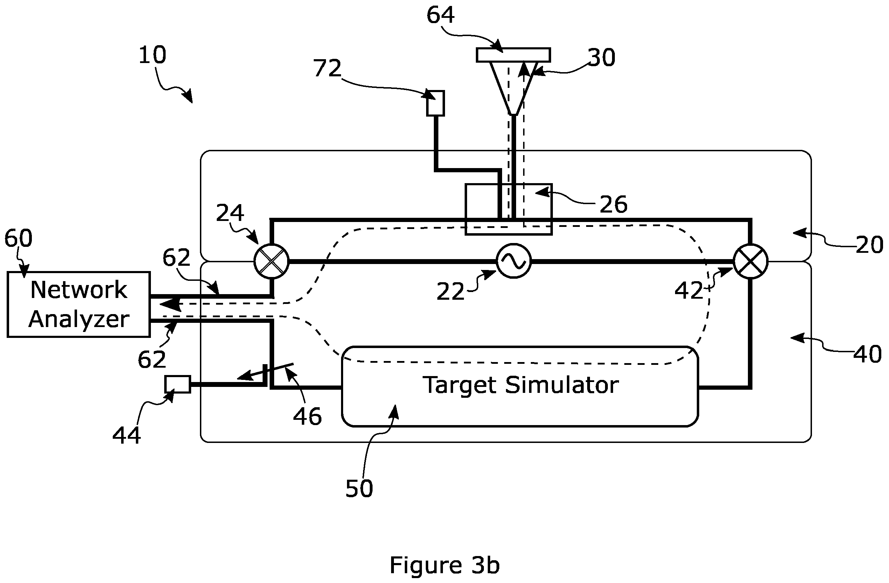

**Fig. 3b** illustrates a further calibrating measurement. For sake of brevity, only additional features of the embodiment of Fig. 3b (compared to previous embodiments) will be described. For example, the measurement device 60 and the measurement process can be similar to the one described with reference to Fig. 3a. The embodiment of Fig. 3b differentiates from the embodiment of Fig. 3a in that a different signal path is created.

More particularly, the signal path of the embodiment of Fig. 3b, which can be referred as the antenna calibration path, can further includes the antenna 30. That is, the calibrating signal generated by the network analyzer 60 can traverse from the network analyzer 60 to the target simulator 50, then to the frequency up converter 42, then to the antenna 30. A reflector element 64 can be provided and positioned in front of the antenna 64. The reflector element 64 can be a metal plate 64. In general, the reflector element 64 can be any element with high reflectivity. Further, the reflector element 64 can be configured to cover at least the main lobe of the antenna 30. In other words, the reflector element 64 blocks the transmission of antenna 30, such that, (almost) all signal power is reflected back. Hence, the calibrating signal hits the surface of the reflector element 30 and is reflected and directed (e.g. by the connector 26) to the frequency downconverter 24 and to the network analyzer 60. The connector 26 can be configured to direct signals coming from the frequency up converter 42 to the antenna 30 and signal coming from the antenna 30 to the frequency down converter 24. Thus, the antenna calibration path as illustrated by the dashed arrow in Fig. 3b and described above can be created.

That is, the antenna calibration path in the embodiment of Fig. 3b can include the antenna 30 in addition to the RTS internal components (as discussed in Fig. 3a). Hence, the antenna calibration path can be used to measure the unintended modifications that can be generated by the RTS internal components and by the antenna 30.

Furthermore, by comparing the unintended modifications caused by the internal RTS components only (calculated by conducting a calibration measurement according to the internal component calibration path illustrated in Fig. 3a) and the unintended modifications caused by the antenna 30 and the internal RTS components together (calculated by conducting a calibration measurement according to the antenna calibration path illustrated in Fig. 3b) the unintended modifications caused only by the antenna 30 can be calculated.

The calibration measurement according to the antenna calibration path illustrated in Fig. 3b, in addition includes the effects of the reflector element 64. Though the reflector element 64 can be configured to comprise a very high reflection coefficient, such as at least 0.9, in general it cannot be a perfect reflector. Typically, a (small) part of the incident signal power on the surface of the reflector element 62 will be absorbed by the reflector element 62 and/or transmitted through the reflector element 62. The reflection coefficient of the reflector element 62 is the parameter defining the ratio of the reflected signal power and absorbed plus transmitted signal power. Hence, the reflector element 64 can advantageously be configured to comprise a high reflection coefficient. Thus the (idealized) reflective coefficient with a value of 1 (or close to 1) is preferred such that the incident signal is reflected by the reflector element 64 with (almost) the same power.

However, the properties of the reflector element 64 (e.g. the reflection coefficient) can be known or measured in advance and be compensated for while calculating the unintended modifications caused by the antenna 30 and the internal RTS components together (calculated by conducting a calibration measurement according to the calibration path illustrated in Fig. 3b).

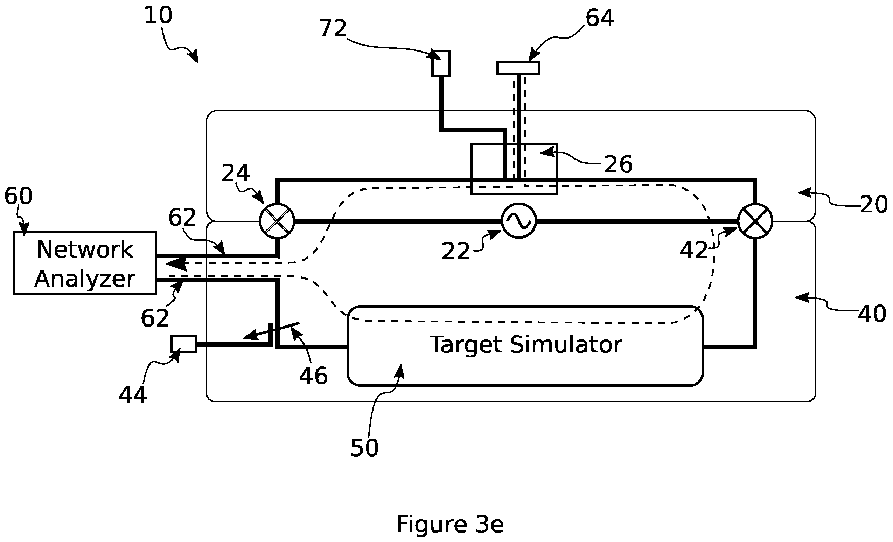

In some embodiments, the reflector element 64 can be provided in front of an antenna connector of the RTS. That is, alternatively to the embodiment of Fig. 3b, the antenna 30 can be removed from the RTS and the reflector element can be provided in the antenna connector of the RTS wherein the antenna 30 can be attached. Such a configuration is illustrated in Fig. 3e. For example, the RTS can comprise a waveguide flange configured to facilitated the connection of the antenna 30 with the RTS. The antenna 30 can, e.g., be screwed to the waveguide flange. In such embodiments, the antenna 30 can be removed from the RTS by unscrewing it from the waveguide flange, and the reflector can be provided in front of the waveguide flange.

With such a configuration, the waveguide flange can be short-circuited (similar to the short-circuiting of the antenna 30, discussed above). Thus, a calibration path as illustrated in Fig. 3e can be created. As it will be understood, the calibration path configured by short-circuiting the antenna connector is similar to the internal component calibration path as discussed with reference to Fig. 3a. More particularly, the internal component calibration path according to Fig. 3e, in addition includes also the further component of the RTS - i.e. the antenna connector. In other words, the configuration illustrated in Fig. 3e provides an alternative way of configuring the internal component calibration path.

That is, simply speaking, the reflector element can be used in two ways. As illustrated in Fig. 3e, the antenna 30 can be removed and the reflector element 64 (e.g. a metal plate 64) can be connected to a waveguide flange comprised by the RTS to facilitate the connection of the antenna 30 with the RTS. Alternatively, as illustrated in Fig. 3b, the antenna is not removed and the reflector element 64 (e.g. a metal plate) can be placed in front of the antenna 30 (i.e. cover the antenna 30 with a metal plate). This would have the advantage that the antenna 30 does not have to be removed.

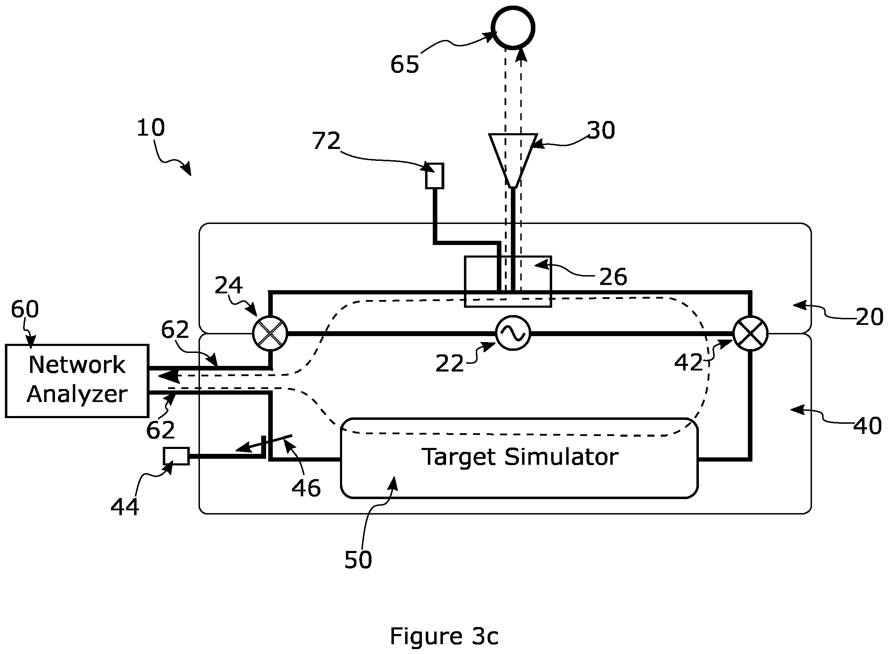

**Fig. 3c** illustrates a further calibrating measurement. For sake of brevity, only differentiation or additional features of the embodiment of Fig. 3c (compared to previous embodiments) will be described.

The calibration path illustrated in Fig. 3c, which can be referred as chamber calibration path, can be configured to further measure the influence of signal modifications that can be caused by the measurement environment wherein the RTS is positioned and used for radar testing (referred as a measurement chamber). Thus, the measurement chamber can further be included in the calibration path. This can be achieved by positioning a reference target 65 in the measurement chamber in front of the RTS, preferably at the position where a RUT is provided during testing of radars. The reference target 65 can be a metal plate, a metallic sphere or a corner reflector. In general, the reference target 64 can be configured to comprise a high reflection coefficient (similar to the reflector element 64 in Fig. 3b). Further, the connector 26 can be configured to direct signal coming from the frequency up converter 42 to the antenna 30 and signals coming from the antenna 30 to the frequency down converter 24.

Thus, the chamber calibration path illustrated by the dashed arrow in Fig. 3c can be configured such that a calibration signal generated by the network analyzer 60 can pass through the target simulator 50, to the frequency up converter 42, to the connector 26 which direct the signal to the antenna 30. The antenna 30 can then transmit the signal over the air. The signal can reach the reference target which reflects (part of) it back to the antenna 30. The connector 26 can direct the signal coming from the antenna 30 to the frequency down converter 24. Further, the signal can be received by the network analyzer 60, where it can be measured.

Thus, the unintended modifications that can be calculated (in a similar manner to Fig. 3a) can comprise unintended modifications coming from the internal components of the RTS, antenna 30 and measurement chamber.

Furthermore, by comparing the unintended modifications caused by the antenna 30 and the internal RTS components (calculated by conducting a calibration measurement according to the antenna calibration path illustrated in Fig. 3b) with the unintended modifications caused by the antenna 30 and the internal RTS components and the measurement chamber (calculated by conducting a calibration measurement according to the chamber calibration path illustrated in Fig. 3c) the unintended modifications caused only by the measurement chamber can be calculated.

Alternatively, in the embodiment illustrated in Fig. 3c the reference target 65 may not be provided or used. In such embodiments, the chamber calibration path can be configured such that a calibration signal generated by the network analyzer 60 can pass through the target simulator 50, to the frequency up converter 42, to the connector 26 which can direct the signal to the antenna 30. The antenna 30 can then transmit the signal over the air. The signal can reach a surface in the measurement chamber (e.g. walls of the chamber). Said surfaces can reflect (part of) the signal back to the antenna 30. The connector 26 can direct the signal coming from the antenna 30 to the frequency down converter 24. Further, the signal can be received by the network analyzer 60, where it can be measured. This can allow measuring the reflections within the measurement chamber. Thus, a change of the reflections inside the measurement chamber can be measured. Measuring the reflections within the measurement chamber can be advantageous for detecting aging of the absorbers of the chamber and/or mechanical changes in the chamber.

In some embodiments, the calibration measurement illustrated in Fig. 3a (for measuring the effects of the components of the RTS) and the calibration measurement illustrated in Fig. 3c (for measuring the effects of the measurement chamber) can be performed in one single measurement (i.e. simultaneously). As it can be noticed, the calibration path of Fig.3a (i.e. the internal component calibration path) is shorter than the calibration path in Fig.3c (i.e. the chamber calibration path). Thus, both paths can be separated over distance which can allow a simultaneous calibration over both the calibration paths.

In such embodiments, wherein the calibration measurement illustrated in Fig. 3a (for measuring the effects of the components of the RTS) and the calibration measurement illustrated in Fig. 3c (for measuring the effects of the measurement chamber) can be performed in one single measurement (i.e. simultaneously), the leakage of the connector 26 can be utilized to facilitate performing a single measurement for two calibrations.

As discussed, the connector 26 (e.g. a circulator 26 or coupler 26) may comprise a defined leakage. For example, when guiding the signal from the frequency up converter 42 to the antenna 30, part of the power of the signal may leak towards the frequency down converter 24. This can be used to create the internal component calibration path that is discussed with reference to Fig. 3a, for a calibration of the RTS. Moreover, the connector 26 can be configured such that the leaked power can be adjusted or pre-set. This can further facilitate creating the internal component calibration path that is discussed with reference to Fig. 3a, for a calibration of the RTS.

Due to the leakage of the connector 26 (which in some embodiments can be adjusted), when the connector 26 is configured to direct a signal from the frequency up converter 42 to the antenna 30, a part of the energy of the signal can be transmitted (i.e. can leak) towards the frequency down converter 24. Thus, two signal paths are present. One is the chamber calibration path, as illustrated in Fig. 3c, with or without the presence of the reference target 65. The other is the internal calibration path as illustrated in Fig. 1.

Moreover, due to the (significantly) different lengths of the internal calibration path and the chamber calibration path, the signals received from each path can be separated from each other. This would allow to differentiate between changes coming from the internal components of the RTS and changes coming from the measurement chamber in one measurement. That is, signals coming from the internal calibration path (see Fig. 3a) can be separated from the signals coming from the chamber calibration path (analog to the path illustrated in Fig. 3c but without the reference target) as the signal propagation time is different (the lengths of the path are different). This would allow to determine changes from RTS as well as from the chamber in one measurement. With the leakage of the connector 26 the changes from the internal components of the RTS can be measured (as discussed with reference to Fig. 3a). By comparing the signal coming from both paths, changes coming from the chamber can be isolated from those coming from the internal components of the RTS. This means the calibration would allow to measure changes in the RTS as well as changes in the chamber (in one measurement). This can be used to e.g. detect aging of the absorbers or mechanical changes in the chamber separated from changes from the RTS.

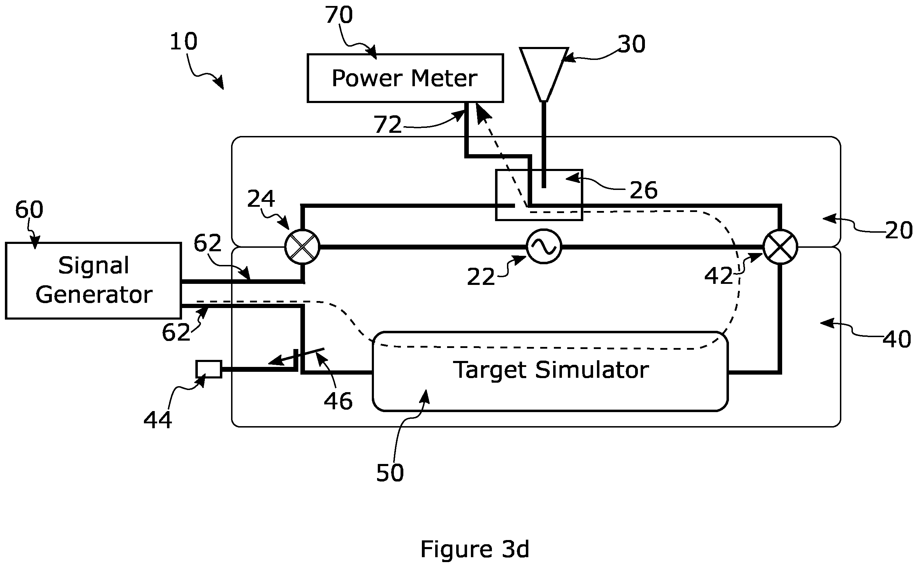

**Fig. 3d** illustrates a further calibrating measurement. For sake of brevity, only differentiation or additional features of the embodiment of Fig. 3d (compared to previous embodiments) will be described.

The calibration path illustrated in Fig. 3d, which can be referred as a power calibration path, can be configured to perform power calibration. The measurement device 60 can be a signal generator 60 (as depicted in Fig. 3d) or a network vector analyzer 60. A power meter 70 can be connected to the RF port 72. The connector 26 can be configured to direct signals coming from the frequency up converter 42 to the RF port 72 and to the power meter 70. The connector 26 can isolate the signal path to the antenna 30 and to the frequency down converter 24 as illustrated in Fig. 3d.

Thus, the power calibration path illustrated, as also illustrated by the dashed arrow in Fig. 3d, can be configured such that a calibration or reference signal generated by the signal generator 60 can pass through the target simulator 50, to the frequency up converter 42, to the connector 26 which direct the signal to RF port 72 and to the power meter 70. Further, the signal can be received by the power meter 70, where its power can be measured.

By comparing the calibration measurement according to the power calibration path illustrated in Fig. 3d, with the calibration measurement according to the internal component calibration path illustrated in Fig. 3a, the attenuation of the path from the coupler 26 to the IF port 44 can be estimated. Similarly, by comparing the calibration measurement according to the power calibration path illustrated in Fig. 3d, with the calibration measurement according to the antenna calibration path illustrated in Fig. 3b, the attenuation of the path from the antenna 30 to the IF port 44 can be estimated. Similarly, by comparing the calibration measurement according to the power calibration path illustrated in Fig. 3d, with the calibration measurement according to the chamber calibration path illustrated in Fig. 3c, the attenuation caused by the measurement chamber and the path from the antenna 30 to the IF port 44 can be estimated.

**Fig. 5** illustrates a further embodiment of the radar target simulator 10, wherein the measurement device 60 is integrated into the radar target simulator 10. The radar target simulator 10 can comprise any of the features discussed with reference to Figs. 1 to 4. That is throughout the description of the drawings, like reference signs denote like structures. Furthermore, some of the features and characteristics described above in conjunction with Fig. 1 to 4 can also used in the embodiment depicted in Fig. 5. For sake of brevity of description, in the below, only additional features present in the embodiment depicted in Fig. 5 are discussed. Similarly, some of the features and characteristics described below in conjunction with Fig. 5 can also be also used in the embodiments depicted in Figs. 1 to 4.

In some embodiments, the measurement device 60 can be provided internal to, i.e., can be integrated into, the radar target simulator 10. Fig. 5 illustrates such an embodiment, wherein the measurement device 60 is connected to the calibration port 62 and integrated into the RTS.

The RTS can comprise a calibration port connector 68 which can be configured to facilitate connecting the measurement device 60 with the calibration port 62. The calibration port connector 68 can be configured for allowing a connection between the measurement device 60 and the output calibration port 62A. This can allow at least a portion of the power of a signal traversing the IF part of the RTS and arriving at the output calibration port 62A to be output to (and thus to be received by) the measurement device 60. Additionally, the calibration port connector 68 can be configured for allowing a connection between the measurement device 60 and the input calibration port 62A. This can allow the measurement device to provide a signal (e.g. the calibration signal) to the IF part of the RTS. Additionally, the calibration port connector 68 can be configured for allowing a connection between the input calibration port 62B and the output calibration port 62A. In other words, the calibration port connector 68 can allow the calibration port 62 to be short circuited. This can be advantageous as it can allow the calibration signal to circulate in the calibration path a plurality of times.

For example, the calibration port connector 68 can comprise two couplers and/or two switches. The two couplers can facilitate allowing the calibration port 62 to be short circuited while allowing the measuring device to receive and provide signals from/to the calibration port. The two switches can allow to selectively open and/or close the connection between the calibration ports 62A, 62B as well as the connection between the measuring device 60 and the calibration port 62.

Fig. 5 illustrates an embodiment wherein the calibration port 62 is short circuited (i.e. the circuit of the IF part is not interrupted in the calibration port 62) and the measurement device 60 is connected by utilizing couplers: one for coupling a signal from the IF part of the RTS to the measurement device 60 and one four coupling a signal from the measurement device 60 to the IF part of the RTS.

It will be understood that the above is only an exemplary implementation of the connection between the measurement device and the IF part of the RTS. Other connections can be realized as well.

It will be understood, that the above features of the connection between the measurement device 60 and the calibration port 62 can also be comprised by the embodiment illustrated in and discussed with reference to Figs. 2 to 4.

The measurement device 60 can also be referred to as a calibration unit 60. The measurement device 60 can for example be a network vector analyzer 60.

Integrating the measurement device 60 into the RTS can be advantageous as it can allow the calibration measurement to be performed, e.g., automatically, at short intervals to check the stability of the RTS. That is, in such embodiments the calibration of the RTS can be performed according to a schedule, e.g., periodically. Moreover, the calibration of the RTS can be performed automatically. For example, a trigger signal (e.g. automatically generated based on a schedule) can trigger the start of a calibration measurement.

Moreover, integrating the measurement device 60 into the RTS can be advantageous as it can reduce or even remove the need of human effort for performing the calibration. That is, there may be no need for a skilled person to provide and connect the measurement device to the RTS for the purpose of calibrating the RTS. As such, there can be more incentive and it can be more convenient and efficient to increase the frequency of performing the calibration measurement. As a result, accuracy of the operation of the RTS can be improved.

Thus, integrating the measurement device 60 into the RTS can generally increase the efficiency of calibrating the RTS. The calibration can be performed faster, more frequently, without human effort and fully automatically according to a time and/or event driven schedule.

Moreover, as discussed, the calibration port 62 can be provided at the intermediate frequency part of the radar target simulator 10. Generally, devices configured to operate at intermediate frequencies (which are typically significantly lower than radio frequencies) are less complex, small and comprise a high mobility compared to devices configured to operate at high radio frequencies. Thus, providing the calibration port 62 at the intermediate frequency part comprises the further advantage of facilitating the integration of the measurement device 60 into the RTS.

That is, the measurement device 60 can be configured to operate at intermediate frequencies. This can allow measurement device 60 to be less complex, not require many circuitries and small. Hence, it can be more easily integrated into the RTS.

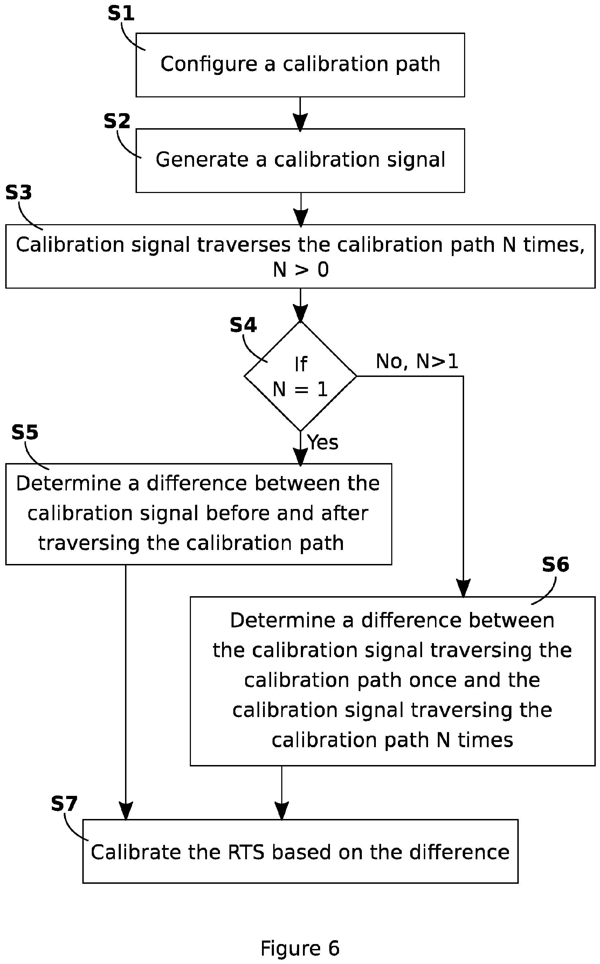

**Fig. 6** depicts a flowchart of methods of calibrating a radar target simulator 10 according to embodiments of the present inventions.

In a step S1, the method can comprise configuring a calibration path. Exemplary calibration paths are illustrated in Figs. 3a to 3e.

In a step S2, the method can comprise generating a calibration signal. For example, the measurement device 60 can generate the calibration signal into the input calibration port 62B.

In a step S3, the method can comprise the calibration signal traversing the calibration path.

In a step S5, the method can comprise determining a difference between the calibration signal before and after traversing the calibration path.

In a step S7, the method can comprise calibrating the signal based on the difference determined in step S5.

The method discussed above with respect to steps S1, S2, S3, S5 and S7 is also illustrated in Figs. 3a to 3e and discussed in detail in their respective description.

In some embodiments, the calibration of the RTS can be based on a relative measurement. In such embodiments, in step S3, the method can comprise the calibration signal traversing the calibration path a plurality of times, preferably 2 times. This can for example be performed by coupling the input calibration port 62B with the output calibration port 62A. This can allow the calibration signal to circulate the calibration path for as long as the input calibration port 62B is coupled with the output calibration port 62A.

In such embodiments, the method can comprise a step S6 wherein a difference between the calibration signal traversing the calibration path once and the calibration signal traversing the calibration path a plurality of times can be determined. Then, in step S7 the method can comprise calibrating the RTS based on the difference calculated in step S6.

Fig. 6 illustrates a generalized method, wherein in step S3 the calibration signal traverses the calibration path N times, wherein N is an integer greater than 0. In step S3, the input calibration port 62B can be isolated from the output calibration port 62A. This allows the calibration signal to traverse the calibration signal only once. Alternatively, in step S3, the input calibration port 62B can be coupled with the output calibration port 62A. This can allow the calibration signal to traverse the calibration path a plurality of times.

In a step S4, the method comprises determining whether N = 1. The determination in step S4 can be performed based on the configuration of the RTS and the measurement device 60. For example, if in step S3 the input calibration port 62B is isolated from the output calibration port 62A, then in step S4 it can be determined that N = 1 and the method can proceed with step S5. On the other hand, if in step S3 the input calibration port 62B is coupled with the output calibration port 62A, then in step S4 it can be determined that N > 1 and the method can proceed with step S6.

In some embodiments, both steps S5 and S6 can be performed. In such embodiments, in step S3 the calibration signal traverses the calibration path a plurality of times. Moreover, each time the calibration signal traverses the calibration path it is received by the measurement device. Based on the received order, the number of times each received calibration signal has traversed the calibration path can be determined. Based thereon, step S5 can be performed for the first calibration signal received (i.e. the one traversing the calibration path once) and step S6 can be performed for at least one of the further received calibration signals.

The RTS can be calibrated based on at least one of the calculated distances.

Calibrating the radar based on a relative measurement (i.e. steps S1, S2, S3 (N>1), S6, S7 can be more efficient and accurate. Allowing the calibration signal to traverse the calibration path more than once can amplify any unintended modification of the calibration signal. As such, they can be detected more easily.

Moreover, the relative measurement can alleviate the need of calibrating the measurement device 60. The error introduced by the measurement device 60 during the measurement of the calibration signal can be cancelled during step S6, i.e., when calculating the difference. Alleviating the need of calibrating the measurement device 60 can be particularly advantageous in embodiments wherein the measurement device 60 is integrated into the RTS.

Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

While in the above, a preferred embodiment has been described with reference to the accompanying drawings, the skilled person will understand that this embodiment was provided for illustrative purpose only and should by no means be construed to limit the scope of the present invention, which is defined by the claims.

## List of elements with referrals numbers

**[0251]**

| | |
|---|---|
| 10 - | Radar Target Simulator (RTS) |
| 20 - | Radio Frequency (RF) part of the RTS |
| 30 - | Antenna |
| 40 - | Intermediate Frequency (IF) part of the RTS |
| 50 - | Target simulator device |
| 60 - | Calibration bridge / Measurement Device / Network analyzer / Signal Generator |
| 70 - | Power meter |
| 90 - | Radar Under Test (RUT) |
| 26 - | Circulator, coupler |
| 22 - | Local oscillator |
| 24 - | Down converter or RF to IF converter |
| 42 - | Up converter or IF to RF converter |
| 44 - | IF port |
| 46 - | IF port coupler |
| 62 - | Calibration port |
| 72 - | RF port |
| 64 - | Reflector Element |
| 65 - | Reference Target |

## Claims

1. A radar target simulator (10) configured to generate a virtual target for testing a radar under test (90) comprising:

   a radio frequency part (20) configured to operate with signals at a radio frequency; and
   an intermediate frequency part (40) configured to operate with signals at an intermediate frequency; and
   a target simulator (50) configured to receive a signal, apply at least one intended modification to the signal and output the signal after applying the at least one intended modification;
   an antenna (30) configured to

- receive a signal radiated by the radar under test (90) and
- send the signal through a first signal guider to the target simulator (50) and
- receive from a second signal guider a signal that is output by the target simulator (50) and
- radiate the signal such that it can be received by the radar under test (90);

a calibration port (62) connected at the intermediate frequency part (40).

2. A radar target simulator (10) according to the preceding claim, wherein the radio frequency is at least 20 GHz and at most 130 GHz or at least 20 GHz and at most 160 GHz, such as between 24.05 GHz to 24.25 GHz or 21.65 to 26.65 GHz or 76 to 77 GHz or 77 to 81 GHz and wherein the intermediate frequency is lower than the radio frequency.

3. A radar target simulator (10) according to any of the preceding claims, wherein the at least one intended modification applied by the target simulator (50) comprises at least one of delaying the signal, changing the frequency of the signal and attenuating the signal.

4. A radar target simulator (10) according to any of the preceding claims, wherein the calibration port (62) is configured to be connected with at least one measurement device (60) and wherein the measurement device (60) is configured to operate at the intermediate frequency, such as between 1 - 6 GHz.

5. A radar target simulator (10) calibration method comprising:

(a) providing a radar target simulator (10) according to any of the preceding claims 1 to 4;
(b) providing in the intermediate frequency part of the radar target simulator (10) a calibration port (62);
(c) connecting a measurement device (60) to the calibration port (62);
(d) generating with the measurement device (60) a calibration signal with a bandwidth centered at the intermediate frequency;
(e) configuring a calibration path;
(f) the calibration signal traversing the calibration path;
(g) calibrating the radar target simulator (10) based on a difference between the calibration signal before traversing the calibration path and the calibration signal after traversing the calibration path.

6. A method according to the preceding claim, the method comprising
the measurement device (60) in step (d) generating the calibration signal and outputting the calibration signal to a first endpoint of the calibration path and
the measurement device (60) receiving the calibration signal at a second endpoint of the calibration path after the calibration signal traverses the calibration path.

7. A method according to any of the 2 preceding claims, the method further comprising
the measurement device (60) recording at least one of a first timestamp, a first frequency and a first signal power of the calibration signal when generated and output by the measurement device (60) and
the measurement device (60) recording at least one of a second timestamp, a second frequency and a second signal power of the calibration signal when the measurement device (60) receives the calibration signal at a second endpoint of the calibration path after the calibration signal traverses the calibration path and
determining

- a time delay for the calibration signal to traverse the calibration path based on a difference between the first timestamp and the second timestamp and
- a frequency shift of the calibration signal based on a difference between the first frequency and the second frequency and
- an attenuation of the calibration signal based on a difference between the first signal power and the second signal power and
- a noise figure indicating a noise added to the calibration signal while traversing the calibration path,
- a frequency response indicating a relation between the attenuation versus frequency of the calibration signal while traversing the calibration path,
- or any combination thereof, and

calibrating the radar target simulator (10) based on at least one of the determined time delay, the determined frequency shift, the determined attenuation, the determined noise figure and the determined frequency response.

8. A method according to any of the 3 preceding claims, wherein the calibration path comprises an internal calibration path allowing the calibration signal to traverse at least one internal component of the radar target simulator (10).

9. A method according to any of the 4 preceding claims, wherein the calibration path comprises an antenna calibration path allowing the calibration signal to traverse at least one internal component of the radar target simulator (10) and the antenna (30).

10. A method according to the preceding claim, wherein the method comprises providing a reflector element (64) in front of the antenna (30), such that, it reduces or blocks the radiation of the calibration signal by the antenna (30) and wherein the reflector element (64) is configured to comprise a high and/or known and/or measurable reflection coefficient, such as, a reflection coefficient of at least 0.9.

11. A method according to any of the 6 preceding claims wherein the calibration path comprises a chamber calibration path allowing the calibration signal to traverse at least one internal component of the radar target simulator (10) and the antenna (30) and through a portion of the measurement chamber, and wherein the measurement chamber is the environment wherein the radar target simulator (10) and the radar under test (90) are positioned for testing of the radar under test (90).

12. A method according to the preceding claim, the method comprising providing a reference target in front of the antenna (30) and at a distance from the antenna (30), such as, 50 to 200 cm, preferably at a position wherein the radar under test (90) is provided when the radar target simulator (10) tests the radar under test (90).

13. A method according to any of the claims 8, 9 and 11, wherein the at least one internal component of the radar target simulator (10) is at least one of the target simulator (50), a frequency up converter (42), a connector (26), a frequency down converter (42), the calibration port (62) and respective signal guiders configured to guide signals, such as, the calibration signals, between two connected internal components of the radar target simulator (10).

14. A system configured to calibrate a radar target simulator (10) comprising:

a radar target simulator (10) according to any of the preceding claims 1 to 4;
a measurement device (60) connected with the radar target simulator (10) at the calibration port (62) of the radar target simulator (10) and
wherein the measurement device (60) is used to calibrate the radar target simulator (10) according to the method according to any of the claims 5 to 13.

15. A system according to the preceding embodiment, wherein the system further comprises a processing unit configured to perform computations for determining at least one of a time delay, a frequency shift, an attenuation, a noise figure and a frequency response.

EP 3 812 790 A1

Figure 1

Figure 2

EP 3 812 790 A1

Figure 3a

EP 3 812 790 A1

Figure 3b

EP 3 812 790 A1

Figure 3c

EP 3 812 790 A1

Figure 3d

EP 3 812 790 A1

Figure 3e

Figure 4

EP 3 812 790 A1

Target Simulator

Figure 5

**S1**
Configure a calibration path

**S2**
Generate a calibration signal

**S3**
Calibration signal traverses the calibration path N times, N > 0

**S4**
If N = 1

No, N>1

Yes

**S5**
Determine a difference between the calibration signal before and after traversing the calibration path

**S6**
Determine a difference between the calibration signal traversing the calibration path once and the calibration signal traversing the calibration path N times

**S7**
Calibrate the RTS based on the difference

Figure 6

Europäisches
Patentamt

European
Patent Office

Office européen
des brevets

# EUROPEAN SEARCH REPORT

**Application Number**

EP 20 20 3623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2004/012517 A1 (ABOU-JAOUDE RAMZI [US] ET AL) 22 January 2004 (2004-01-22)<br>* abstract *<br>* paragraphs [0002], [0009], [0010] *<br>* paragraphs [0017] - [0026]; figure 1 *<br>----- | 1-4<br><br>5-15 | INV.<br>G01S7/03<br>G01S7/40<br>G01R27/28<br>G01S13/931 |
| A | ENGELHARDT MAXIMILIAN ET AL: "A high bandwidth radar target simulator for automotive radar sensors",<br>2016 EUROPEAN RADAR CONFERENCE (EURAD), EUMA,<br>5 October 2016 (2016-10-05), pages 245-248, XP033041476,<br>[retrieved on 2017-01-09]<br>* abstract *<br>* paragraphs [0III], [00IV], [0VII]; figures 1-4 *<br>----- | 1-15 | |

TECHNICAL FIELDS
SEARCHED (IPC)

G01S
G01R
G09B

The present search report has been drawn up for all claims

| Place of search | Date of completion of the search | Examiner |
|---|---|---|
| Munich | 3 March 2021 | van Norel, Jan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................

& : member of the same patent family, corresponding
document

EPO FORM 1503 03.82 (P04C01)

EP 3 812 790 A1

## ANNEX TO THE EUROPEAN SEARCH REPORT
## ON EUROPEAN PATENT APPLICATION NO.

EP 20 20 3623

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2021

| Patent document cited in search report | Publication date | Patent family member(s) | Publication date |
|---|---|---|---|
| US 2004012517 A1 | 22-01-2004 | NONE | |

EPO FORM P0459

For more details about this annex : see Official Journal of the European Patent Office, No. 12/82